# EUROPÄISCHE PATENTSCHRIFT

(11) **EP 2 540 573 B1**
(45) Veröffentlichungstag und Bekanntmachung des Hinweises auf die Patenterteilung: **19.03.2014**
(21) Anmeldenummer: 12401112.3
(22) Anmeldetag: 09.06.2012
(51) Int. Cl.: B60R 9/06, B60R 9/10

(54) **Zusammenklappbarer Lastenträger mit einer Kupplungsvorrichtung zur Befestigung an einer Anhängerkupplung eines Kraftfahrzeugs**
Collapsible load bearing device with a coupling device for fixing to a trailer coupling of a motor vehicle
Support de charge repliable avec un dispositif d'embrayage pour la fixation à l'attelage d'un véhicule automobile

(30) Priorität: 28.06.2011 DE 102011108659
(43) Veröffentlichungstag der Anmeldung: 02.01.2013
(73) Patentinhaber: I-Racks GmbH, 88284 Wolpertswende (DE)
(72) Erfinder: Ziola, Stefan, 88284 Wolpertswende (DE)
(74) Vertreter: Patentanwälte Hosenthien-Held und Dr. Held

(56) Entgegenhaltungen:
- WO-A1-2010/085199
- DE-A1-102010 036 898
- FR-A1- 2 688 178
- US-A1- 2004 256 429
- US-A1- 2007 012 634

## Beschreibung

Die Erfindung betrifft einen zusammenklappbaren Lastenträger, insbesondere Heckträger, mit einer Kupplungsvorrichtung zur Befestigung an einer Anhängerkupplung eines Kraftfahrzeugs gemäß dem Oberbegriff des Anspruches 1.

Aus der DE 195 40 041 A1 ist eine Vorrichtung zur Befestigung eines Lastenträgers, beispielsweise eines Fahrradhalters, auf einer Anhängerkupplung eines Fahrzeugs bekannt. Diese Vorrichtung hat ein Gehäuseteil, welches Hülsen für die Befestigung des Lastenträgers am Gehäuseteil, eine obere Stützfläche für das Zusammenwirken mit der Kugel und eine untere Stützfläche für das Zusammenwirken mit dem Hals der Kugel aufweist. Ferner hat das Gehäuseteil einen in der Höhe zwischen der oberen und der unteren Stützfläche gelegenen Spannteil, der zwischen einer offenen Position zur Montage der Vorrichtung auf und zur Demontage von der Anhängerkupplung und einer Spannposition am Hals oder an der Kugel beweglich ist. Der Spannteil hat eine Öffnung, durch die die Kugel der Anhängerkupplung und eventuell ein Teil von deren Hals bei der Montage/Demontage durchgeführt werden können.

Aus der DE 10 2006 013 465 A1 ist eine Kupplungsvorrichtung für einen Lastenträger bekannt, welche eine Kalotte und einen Spannbügel mit einem Brückenteil aufweist. Die Vorrichtung kann auf die Anhängerkupplung aufgesetzt werden und ist in korrekt aufgesetzter Position in einer etwa horizontalen Ebene stabilisiert. Zum Abheben aus dieser stabilisierten Position kann der Lastenträger rückseitig etwas angehoben werden und der Spannbügel mit Hilfe eines Spannhebels über den Kopf angehoben werden. Zur Verspannung wird, ausgehend von der stabilisierten Position, zunächst eine Verrastung zwischen dem Spannhebel und dem Spannbügel durch Verschwenken einer Klinke gelöst und anschließend durch ein Verschwenken des Spannhebels nach hinten der Spannbügel gegen den Kopf der Anhängerkupplung gespannt. Die Spannbewegung entsteht dabei mit Hilfe einer Exzenterwelle, an deren exzentrischen Endbereichen der Spannhebel fixiert ist.

Aus der DE 10 2008 047 110 A1 ist eine Hecklastträgerkupplung bekannt, bei welcher ein Einschwenken und Spannen eines Spannbügels durch eine Schwenkbewegung eines kurzen, als Bedienelement dienenden Hebels um eine Schwenkachse, die horizontal und in Fahrzeuglängsrichtung verläuft, erfolgt.

Ferner ist aus der EP 1 799 512 B1 ein Lastenträger bekannt, bei dem ein als Bedienelement dienender Hebel direkt mit einem zentralen Träger des Lastenträger verbunden ist, so dass der gesamte Lastenträger als Hebel dient. Die Schwenkbewegung des Hebels/Lastenträgers erfolgt um eine Schwenkachse, die horizontal und senkrecht Fahrzeuglängsrichtung verläuft. Zum Klemmen und Lösen der Klemmverbindung muss entsprechend der gesamte Lastenträger nach unten bzw. oben geschwenkt werden.

Die DE 699 05 676 T2 offenbart ein Spannen eines Lastenträgers mittels der Schwenkbewegung zweierTräger.

Die FR 2 688 178 A1 offenbart einen zusammenklappbaren Lastenträger gemäß dem Oberbegriff des Anspruchs 1 wobei ein an einer Anhängerkupplung anbringbaren Basisträger auf dem als Zusatzteil ein Fahrradträger aufsetzbar ist. Der Basisträger besteht aus einem Rahmen mit einem fest hiermit verbundenen vertikalen Rohr. Am Rahmen ist ein Bedienelement beweglich angebracht, mittels dem der Basisträger an einer Anhängerkupplung anbringbar ist. Dieses Bedienelement dient hierbei der Betätigung einer Kupplungsvorrichtung. Zur Sicherung der gespannten Stellung ist eine zusätzliche Verriegelung des Bedienelements im Rahmen vorgesehen.

Die US 2007/012634 A1 und die US2004/256429 A1 zeigen jeweils zwei Arme, die mittels eines Kniegelenks auseinandergedrückt werden, wobei das Bedienelement dem Auseinanderdrücken der beiden Arme und damit einem Klemmen einer Anhängerkupplung mit einer am gegenüberliegenden Ende der Arme vorgesehenen Kupplungsvorrichtung dient.

Aus der nachveröffentlichten DE 10 2010 036 898 A1 ist ferner ein zusammenklappbarer Lastenträger bekannt, der zwei hochklappbare Stellbereiche hat, auf welche bis zu zwei Fahrräder stellbar sind. Der Lastenträger ist durch eine Basis und eine mit der Basis schwenkbar verbundene Trägeranordnung gebildet. Hierbei dient einer der Trägerrahmen der Bewegung eines Spannbügels über die Kugel der Anhängekupplung, der andere Trägerrahmen dient dem eigentlichen Spannen. Eine entsprechende Ausgestaltung kann im Falle von Fehlbedienungen zu Beschädigungen führen. Insbesondere muss eine vorgegebene Reihenfolge in Bezug auf das Herunterklappen der Trägerrahmen bei der Bedienung eingehalten werden.

Die vorstehenden Lastenträger lassen noch Wünsche offen, insbesondere in Hinblick auf eine sichere und einfache Bedienbarkeit.

Der Erfindung liegt daher die Aufgabe zu Grunde, einen Lastenträger zur Verfügung zu stellen, der sicher und einfach bedienbar ist.

Diese Aufgabe wird erfindungsgemäß durch einen Lastenträger mit den Merkmalen des Anspruchs 1 gelöst. Vorteilhafte Ausgestaltungen sind Gegenstand der Unteransprüche.

Dadurch, dass das Einschwenken und Spannen des Spannbügels durch eine einfache Schwenkbewegung eines einzigen als Bedienelement dienenden Hebels um eine stationäre Schwenkachse erfolgt, wobei der als Bedienelement dienende Hebel gleichzeitig auch den Stellbereich bildet, ergibt sich eine sehr einfache, sichere Betätigung. Natürlich ist auch eine mehrteilige Ausgestaltung des Bedienhebels möglich. Die Zahl möglicher Bedienfehler kann minimiert werden. Der Hebel ist, wenn er gleichzeitig den Stellbereich bildet, mit einem sehr großen Hebelarm ausgebildet sein, so dass geringe Bedienkräfte zu sehr hohen Spannkräften führen und die Bedienung leicht ist. Durch die Doppelfunktion des Stellbereichs und des ihn tragenden Trägerarms kann zudem Gewicht eingespart werden, so dass der Lastenträger leichter bauen kann.

Bevorzugt ist die Schwenkbewegung des Hebels mittels eines einzigen Übertragungselements an die Kupplungsvorrichtung übertragbar, und die Kupplungsvorrichtung weist eine Getriebeanordnung aufweist, welche die Schwenkbewegung des Hebels in einem ersten Teilbereich in eine Einschwenkbewegung des Spannbügels und in einem zweiten Teilbereich in eine Spannbewegung des Spannbügels umsetzt.

Die Schwenkachse des Hebels verläuft bevorzugt im Wesentlichen parallel zu einem zentralen Träger.

Insbesondere bevorzugt ist eine Ausgleichsanordnung vorgesehen, welche in einem dritten Teilbereich der Schwenkbewegung des Hebels einen Ausgleich für unterschiedliche Kugeldurchmesser des Kopfes der Anhängerkupplung vorsieht, wobei der dritte Teilbereich der Schwenkbewegung zwischen dem ersten Teilbereich, in welchem die Einschwenkbewegung erfolgt, und dem zweiten Teilbereich, in welchem die Spannbewegung des Spannbügels erfolgt, vorgesehen ist. Diese Ausgleichsanordnung ermöglicht trotz unterschiedlicher Kugeldurchmesser des Kopfes eine konstante Spannkraft. Unabhängig hiervon hat der Kugeldurchmesser des Kopfes keinen Einfluss auf die Schwenkbewegung des Hebels, d.h. die Ausgangs- und Endlage desselben ist immer gleich, so dass mit einfachen Mitteln ein korrektes Spannen überwacht werden kann, beispielsweise durch die Verriegelbarkeit des Hebels in der gespannten Stellung.

Das Übertragungselement ist bevorzugt mit einem Zahnsegment formschlüssig verbunden, und der Hebel ist bevorzugt mit einer Klinke verbunden, welche in Eingriff mit einem Zahnbereich des Zahnsegments gelangen kann, wobei ein Federelement zwischen Klinke und Zahnsegment angeordnet ist, welche im ersten Teilbereich der Schwenkbewegung das Zahnsegment mit der Klinke kraftschlüssig mitnimmt und im zweiten Teilbereich der Schwenkbewegung einen Eingriff der Sperrzähne in den Zahnbereich des Zahnsegments ermöglicht.

Insbesondere bevorzugt wird der Eingriff der Sperrzähne durch eine Steuerplatte im dritten Teilbereich der Schwenkbewegung des Hebels verhindert, wodurch der Ausgleich unterschiedlicher Kugeldurchmesser der Anhängerkupplung möglich wird.

Die Getriebeanordnung kann insbesondere durch ein Hebelgetriebe und/oder Kurvengetriebe gebildet sein.

Gemäß einer bevorzugten Ausführungsform ist die Getriebeanordnung, welche ausgehend von einer reinen Schwenkbewegung das Einschwenken des Spannbügels und das Spannen des Spannbügels bewirkt, durch ein Viergelenk gebildet. Hierbei kann insbesondere das Übertragungselement exzentrisch bezüglich der Schwenkachse des Hebels angeordnet sein.

Obwohl im Folgenden als Lastenträger auf sogenannte Heckträger Bezug genommen wird, kann bei Sonderfahrzeugen die Anhängerkupplung auch an einer anderen Seite des Fahrzeugs vorgesehen sein, beispielsweise an der Vorderseite. Selbstverständlich kann der erfindungsgemäße Lastenträger auch hierfür verwendet werden.

Im Folgenden ist die Erfindung anhand eines Ausführungsbeispiels unter Bezugnahme auf die beiliegende Zeichnung näher erläutert. In der Zeichnung zeigen:
- Fig. 1: eine perspektivische Ansicht des zentralen Bereichs des Lastenträgers gemäß dem Ausführungsbeispiel mit geöffneter Kupplungsvorrichtung,

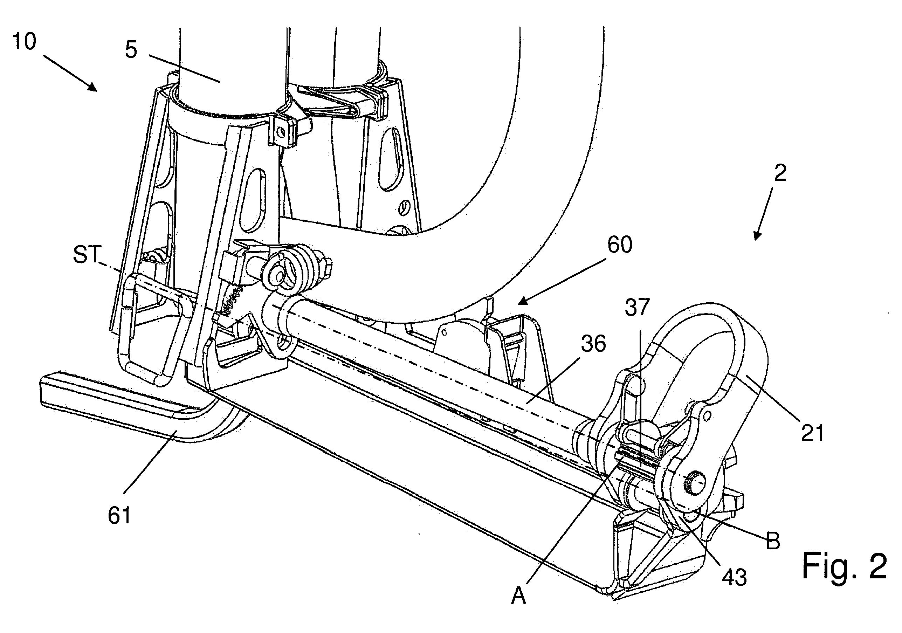

- Fig. 2: eine andere perspektivische Ansicht von Fig. 1,

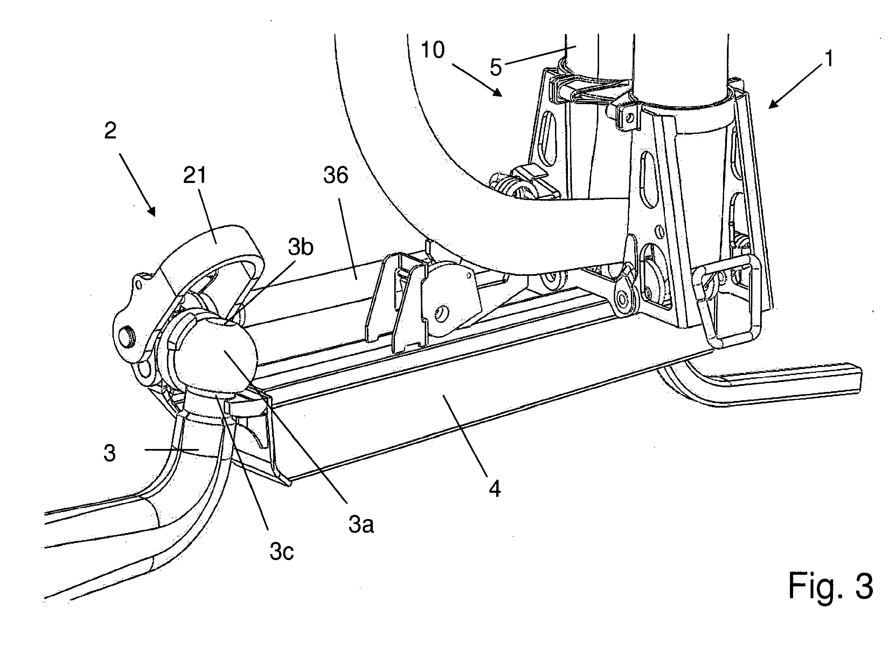

- Fig. 3: eine perspektivische Ansicht des zentralen Bereichs des Lastenträgers in einer auf eine Anhängerkupplung aufgesetzten, stabilisierten Position,

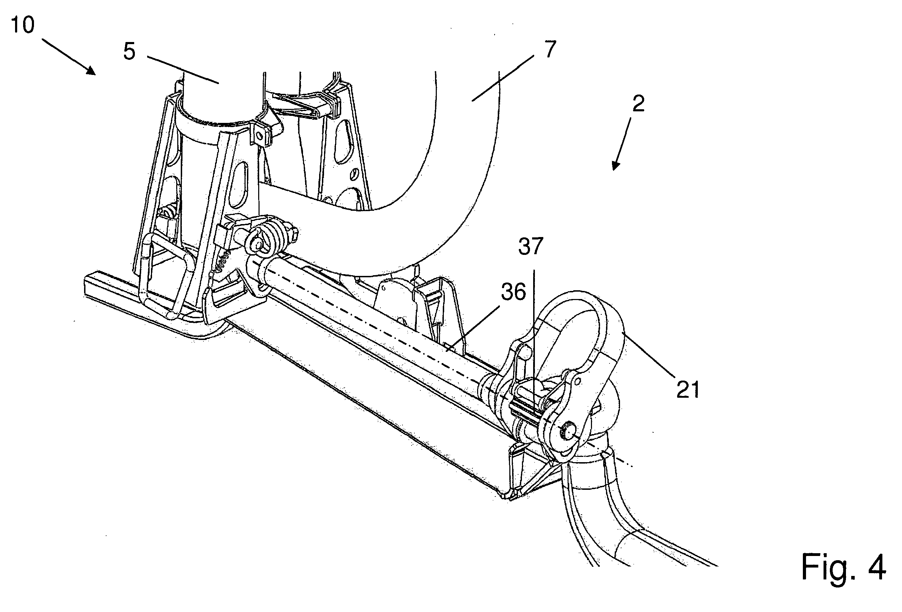

- Fig. 4: eine andere perspektivische Ansicht von Fig. 3,

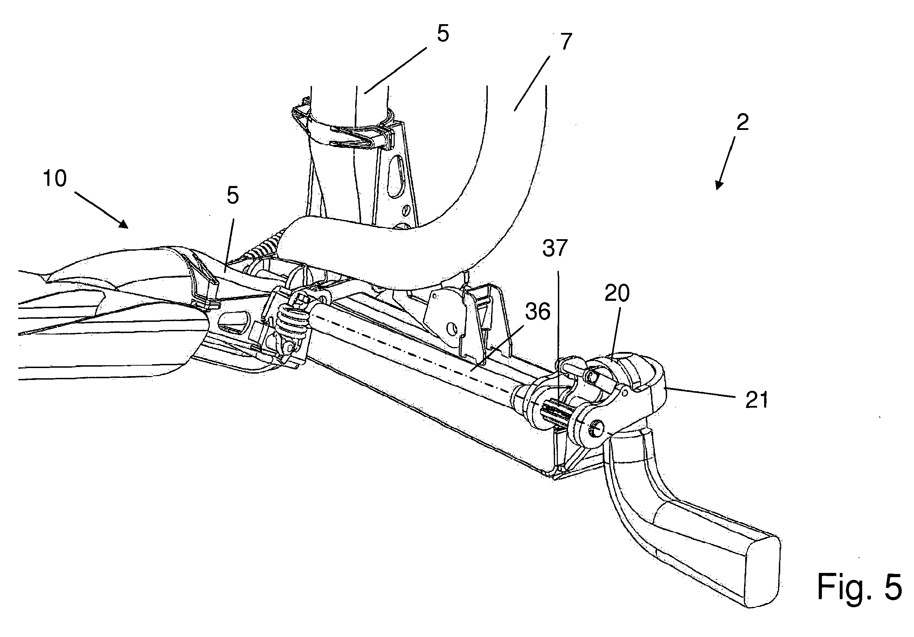

- Fig. 5: eine perspektivische Ansicht zu Beginn des Spannens der Kupplungsvorrichtung bei einer Anhängerkupplung mit einem Durchmesser von 49,5 mm,

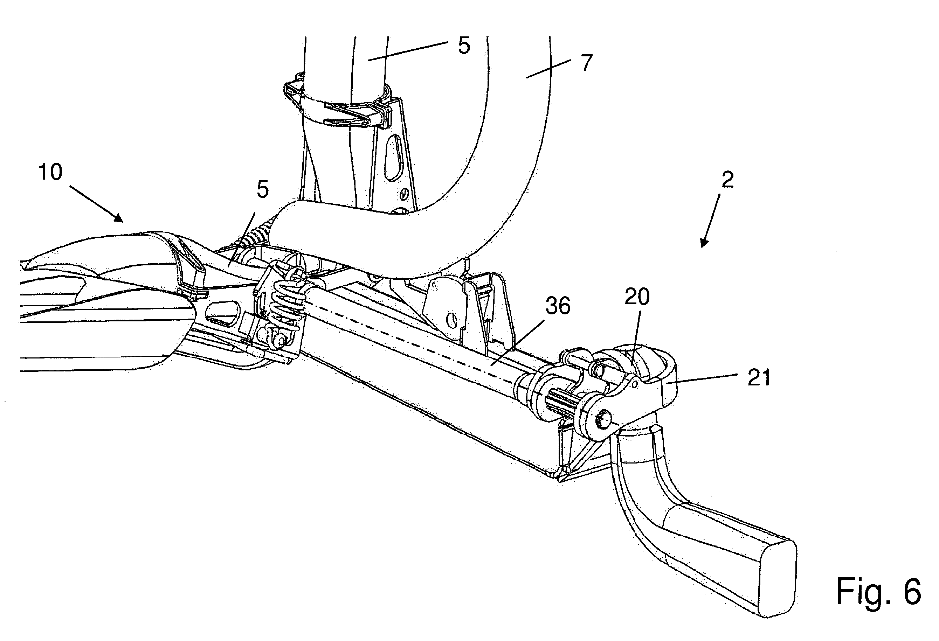

- Fig. 6: eine perspektivische Ansicht zu Beginn des Spannens der Kupplungsvorrichtung bei einer Anhängerkupplung mit einem Durchmesser von 50 mm,

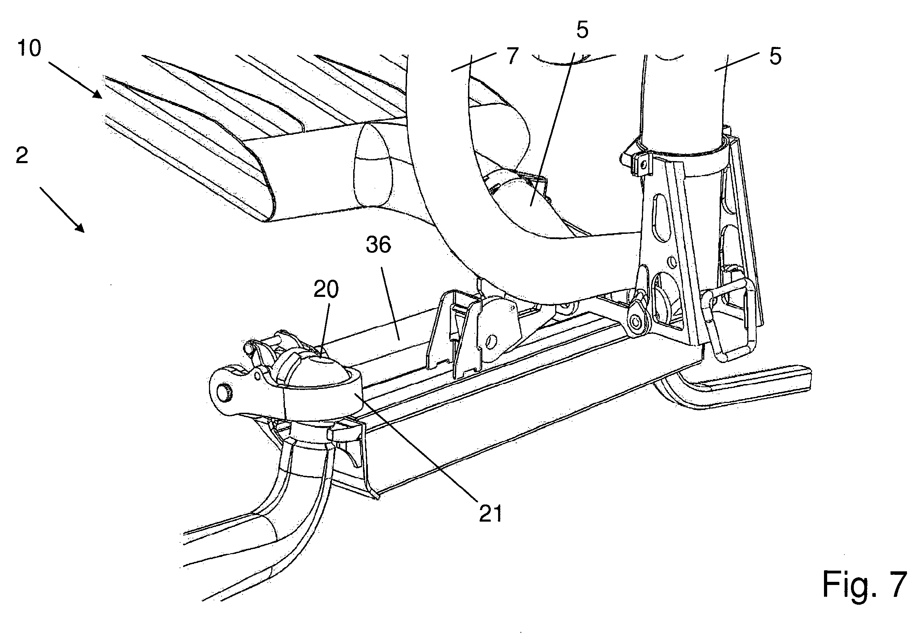

- Fig. 7: eine andere perspektivische Ansicht von Fig. 6,

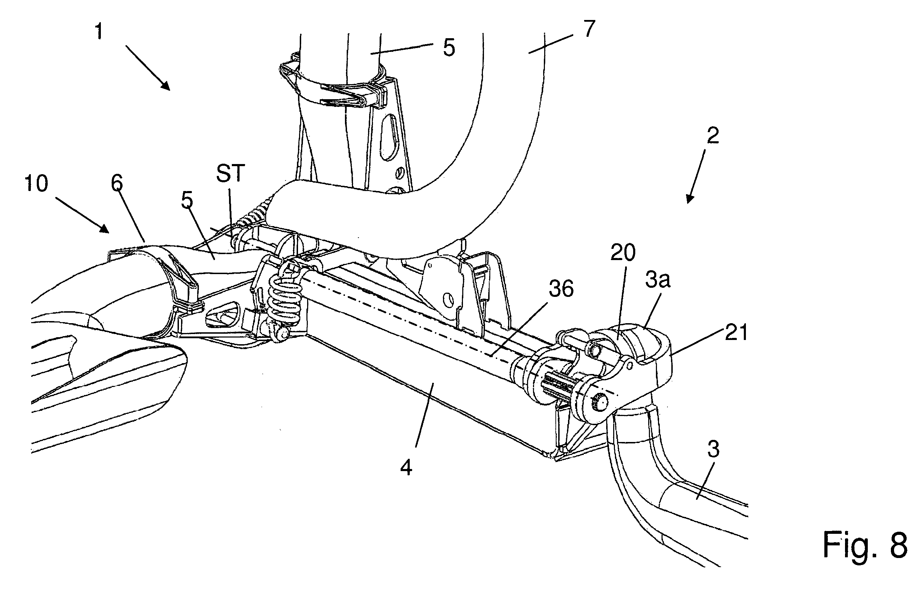

- Fig. 8: eine perspektivische Ansicht des zentralen Bereichs des Lastenträgers im gespannten Zustand der Kupplungsvorrichtung (Durchmesser Kopf 50 mm),

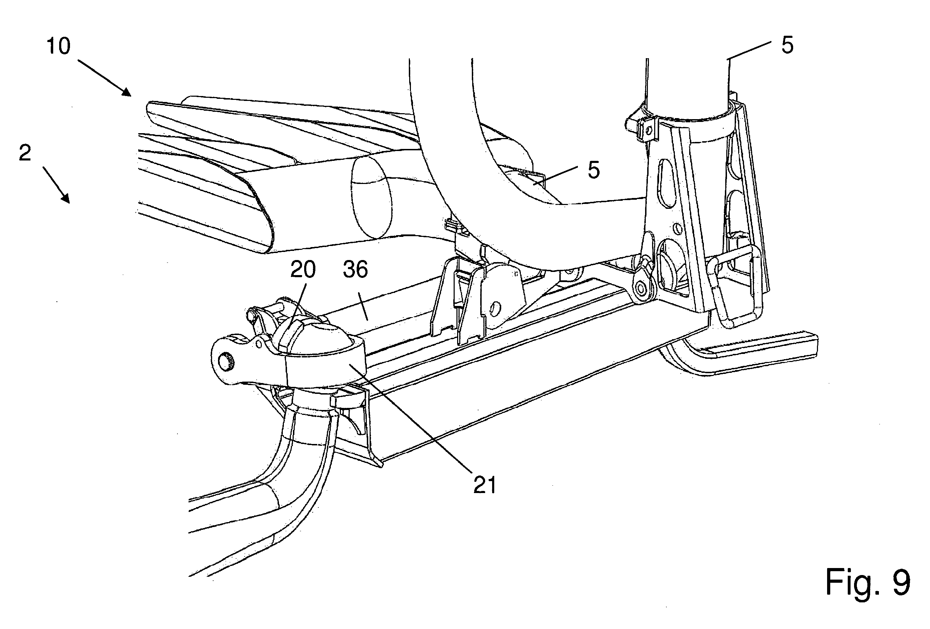

- Fig. 9: eine andere perspektivische Ansicht von Fig. 8,
- Fig. 10: eine teilweise Vorderansicht des Kupplungsbereichs mit geöffnetem Spannbügel,
- Fig. 11: eine teilweise aufgerissene Vorderansicht des Kupplungsbereichs bei Beginn des Spannens (Durchmesser Kopf 49,5 mm),
- Fig. 12: eine teilweise aufgerissene Vorderansicht des Kupplungsbereichs bei Beginn des Spannens (Durchmesser Kopf 50 mm),
- Fig. 13: eine teilweise aufgerissene Vorderansicht des Kupplungsbereichs in gespannter Position,

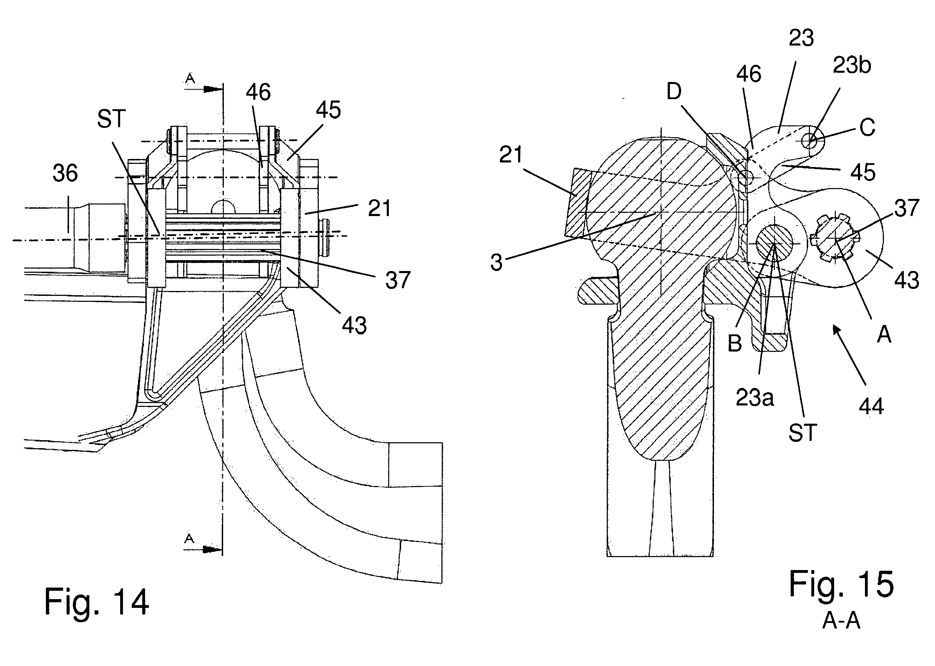

- Fig. 14: eine Seitenansicht der Anhängerkupplung mit Kupplungsbereich,
- Fig. 15: einen Schnitt entlang Linie A-A in Fig. 13,
- Fig. 16: einen Schnitt durch den Kugeldurchmesser-Ausgleich in geöffneter Position,
- Fig. 17: einen Schnitt durch den Kugeldurchmesser-Ausgleich vor Beginn des Zahneingriffs,
- Fig. 18: einen Schnitt durch den Kugeldurchmesser-Ausgleich bei Beginn des Spannens (Durchmesser Kopf 49,5 mm),
- Fig. 19: einen Schnitt durch den Kugeldurchmesser-Ausgleich bei Beginn des Spannens (Durchmesser Kopf 50 mm),
- Fig. 20: einen Schnitt durch den Kupplungsbereich in gespannter Position,

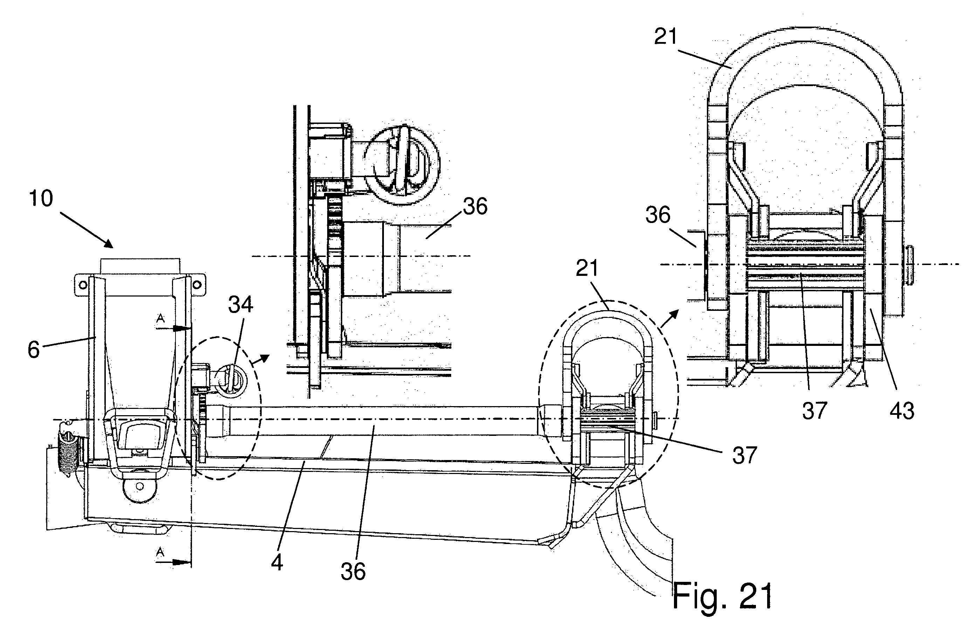

- Fig. 21: einen Schnitt längs des zentralen Trägers zur Verdeutlichung der Schnittführung der Figuren 16 bis 20,
- Fig. 22: eine Detailansicht der Klinke,
- Fig. 23: eine perspektivische Ansicht des Viergelenks der Kupplungsvorrichtung samt Explosionsdarstellung,
- Fig. 24: eine Seitenansicht eines Kraftfahrzeugs mit angebrachtem, einsatzbereitem Lastenträger,
- Fig. 25: eine Draufsicht auf Fig. 24,

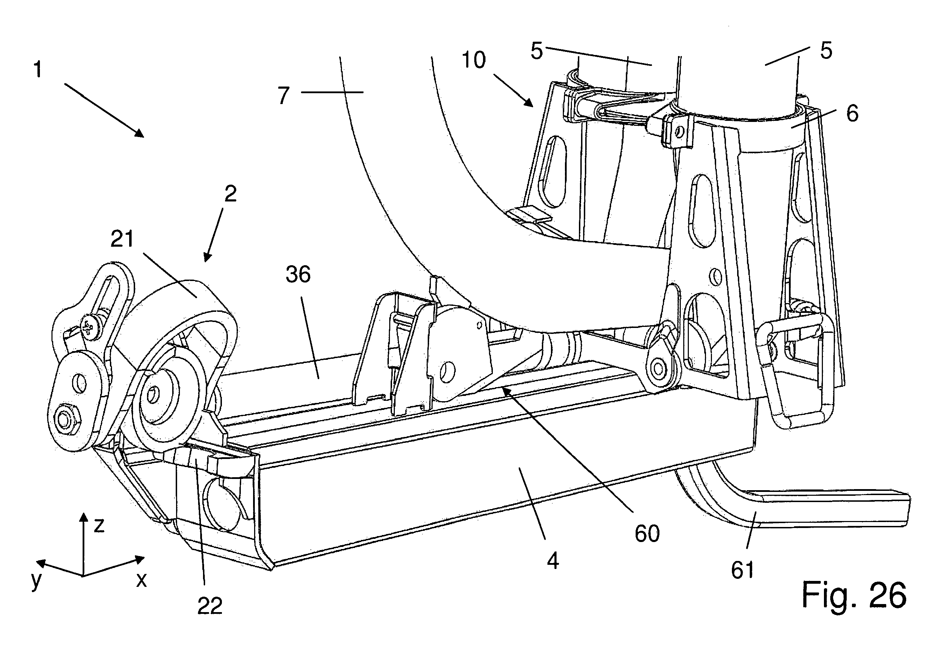

- Fig. 26: eine perspektivische Ansicht des zentralen Bereichs des Lastenträgers gemäß einer Variante des Ausführungsbeispiels mit geöffneter Kupplungsvorrichtung,

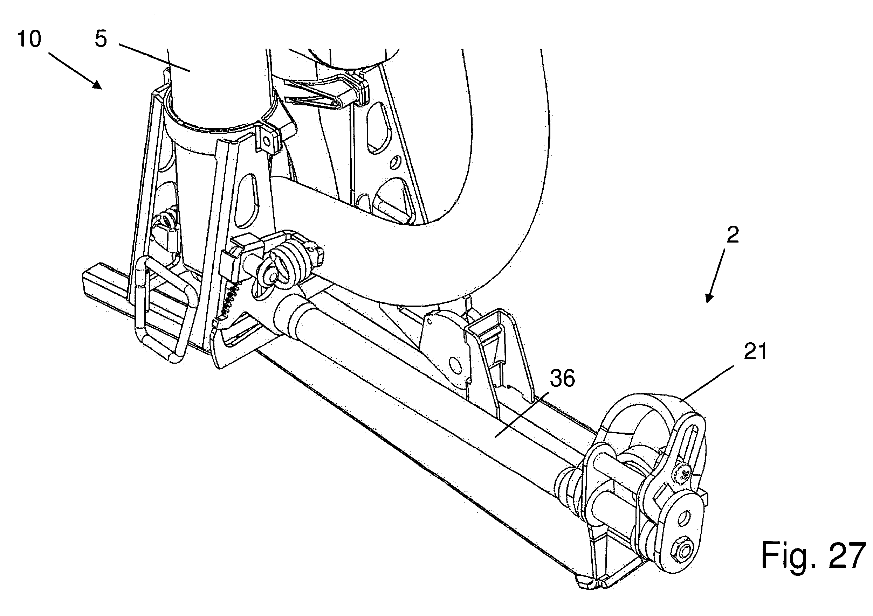

- Fig. 27: eine andere perspektivische Ansicht von Fig. 26,

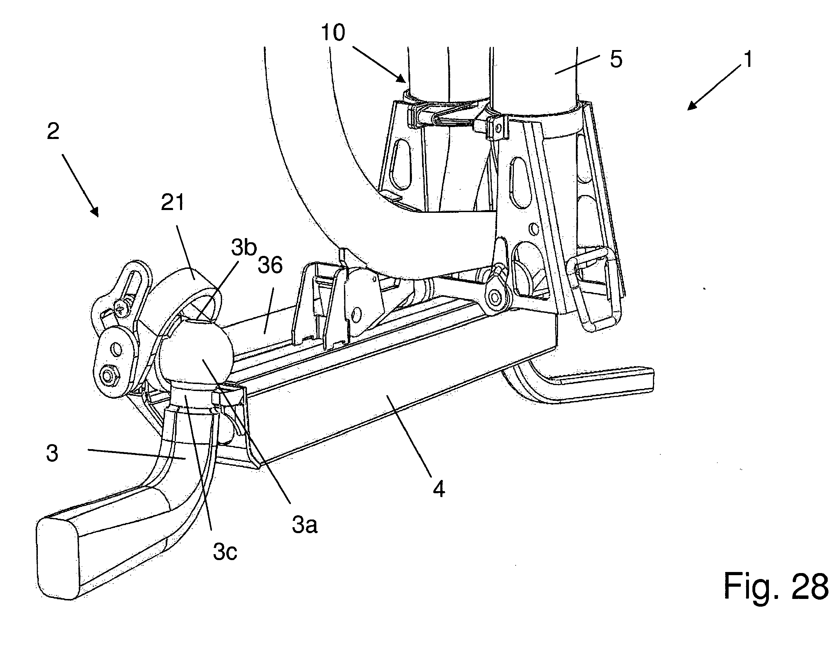

- Fig. 28: eine perspektivische Ansicht des zentralen Bereichs des Lastenträgers in einer auf eine Anhängerkupplung aufgesetzten, stabilisierten Position,

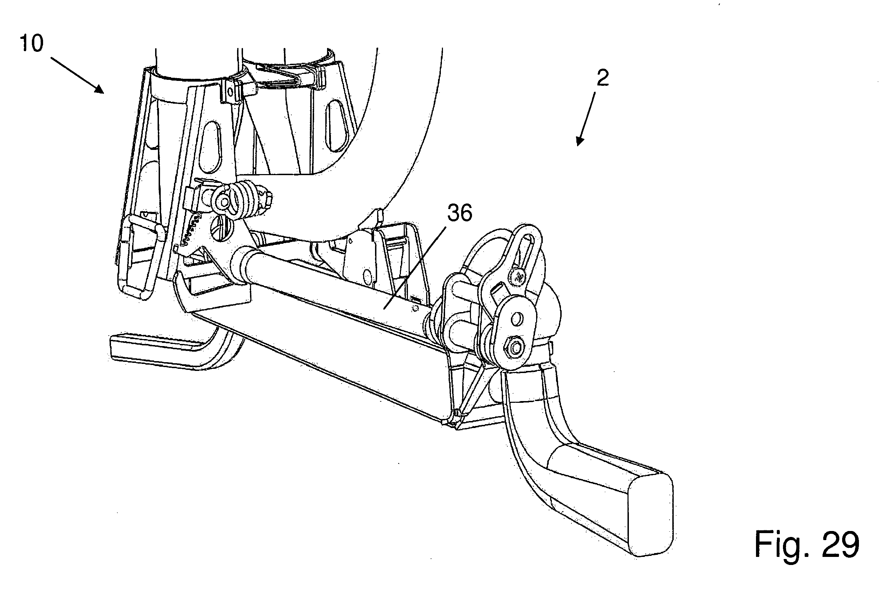

- Fig. 29: eine andere perspektivische Ansicht von Fig. 28,

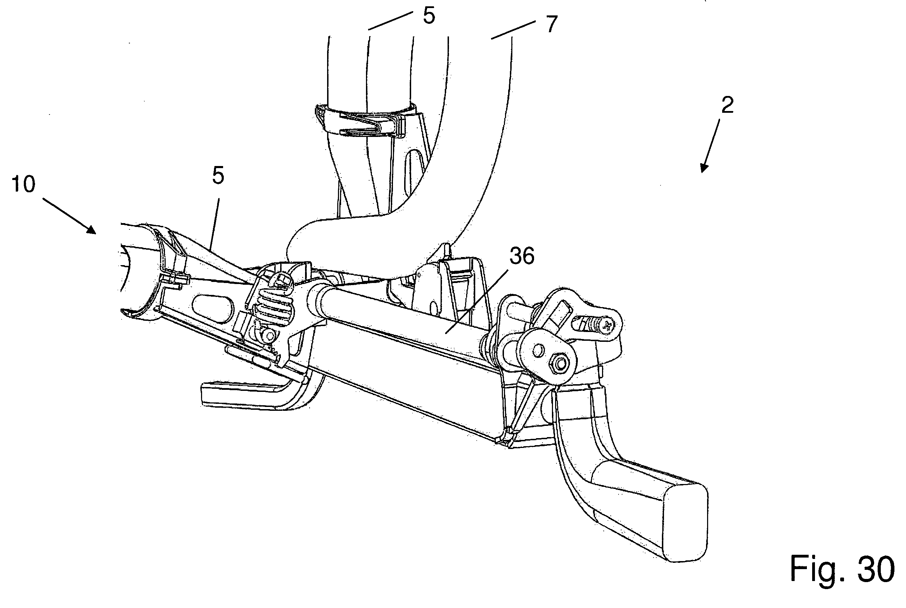

- Fig. 30: eine perspektivische Ansicht zu Beginn des Spannens der Kupplungsvorrichtung bei einer Anhängerkupplung mit einem Durchmesser von 49,5 mm,

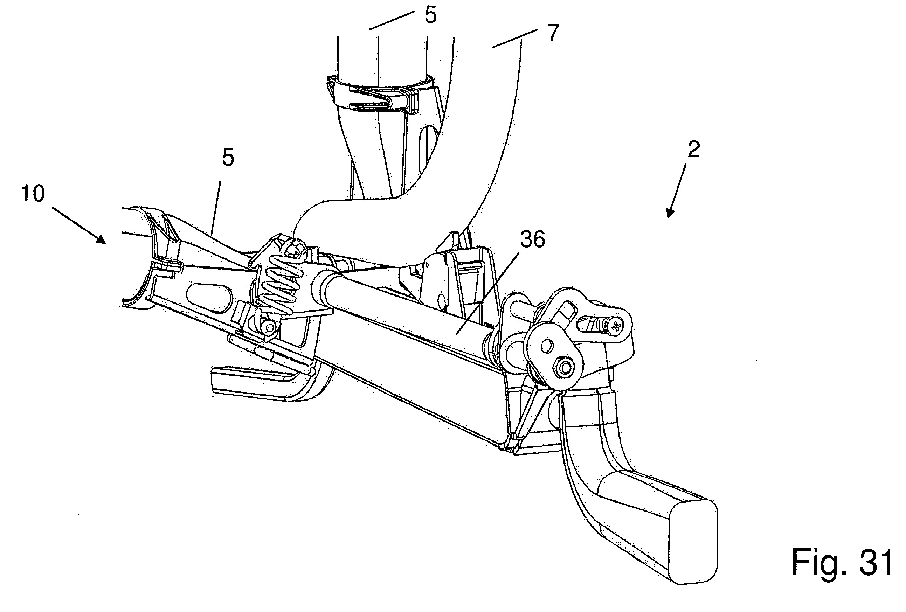

- Fig. 31: eine perspektivische Ansicht zu Beginn des Spannens der Kupplungsvorrichtung bei einer Anhängerkupplung mit einem Durchmesser von 50 mm,

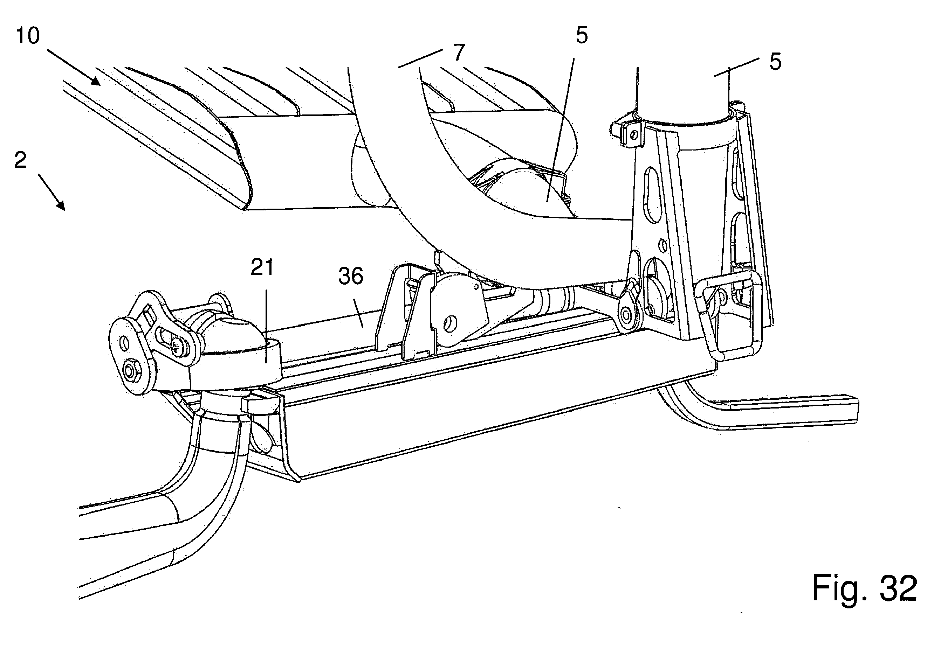

- Fig. 32: eine andere perspektivische Ansicht von Fig. 31,

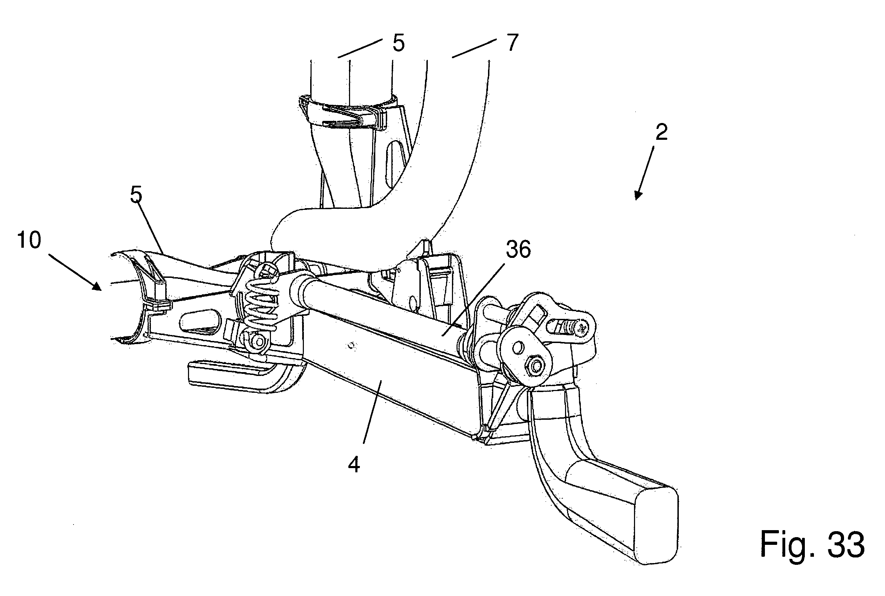

- Fig. 33: eine perspektivische Ansicht des zentralen Bereichs des Lastenträgers im gespannten Zustand der Kupplungsvorrichtung (Durchmesser Kopf 50 mm),

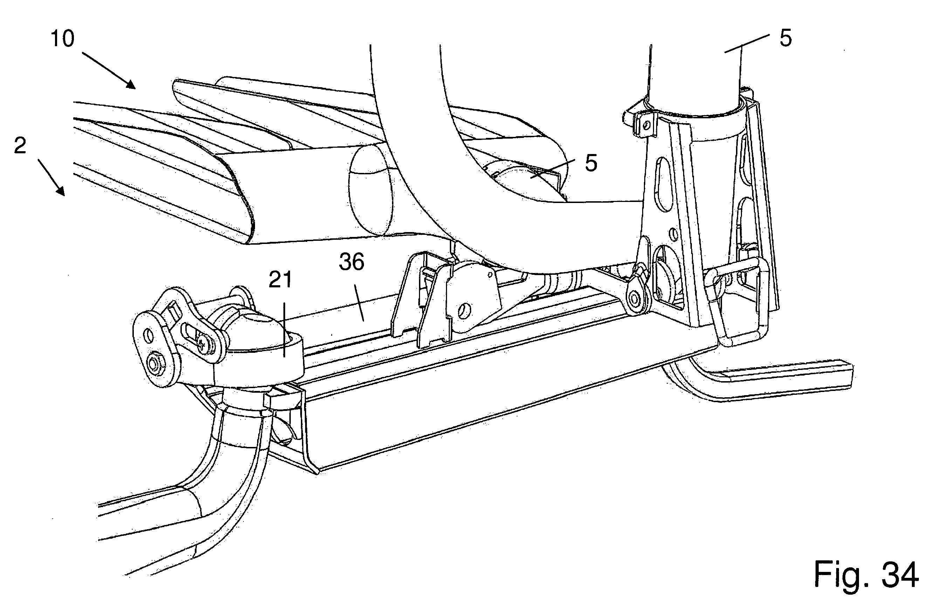

- Fig. 34: eine andere perspektivische Ansicht von Fig. 33,

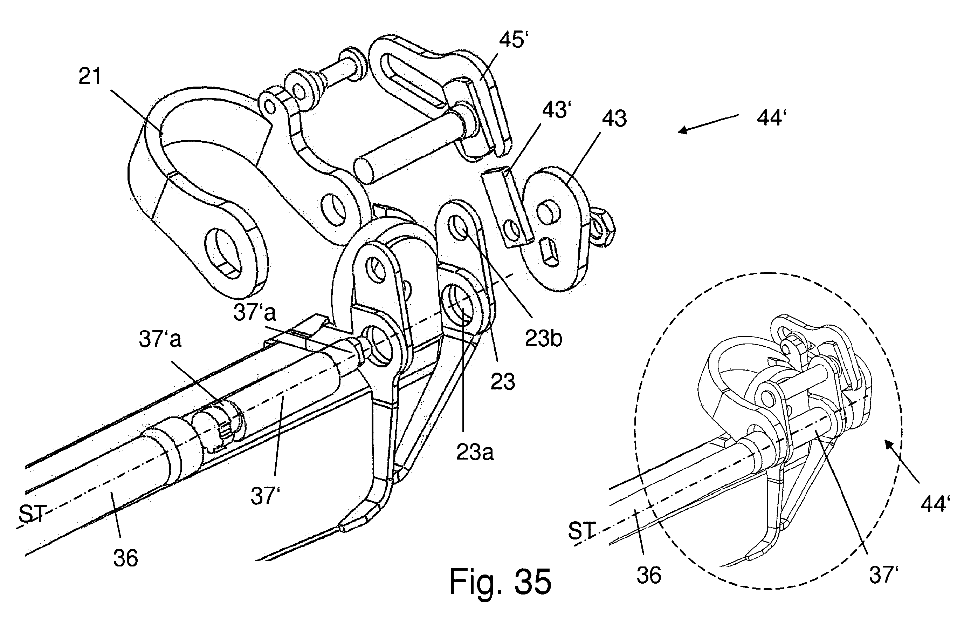

- Fig. 35: eine perspektivische Ansicht des Gelenks der Kupplungsvorrichtung samt Explosionsdarstellung,

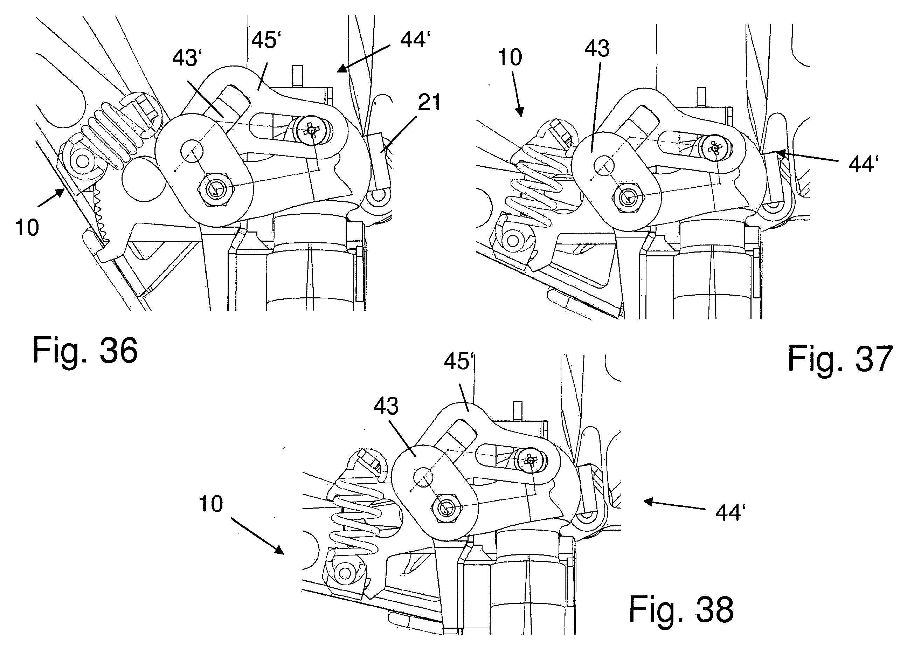

- Fig. 36: eine teilweise aufgerissene Seitenansicht des Kupplungsbereichs mit geschlossenem Spannbügel,
- Fig. 37: eine teilweise aufgerissene Seitenansicht des Kupplungsbereichs bei Beginn des Spannens (Durchmesser Kopf 50 mm),
- Fig. 38: eine teilweise aufgerissene Seitenansicht des Kupplungsbereichs in gespannter Position,

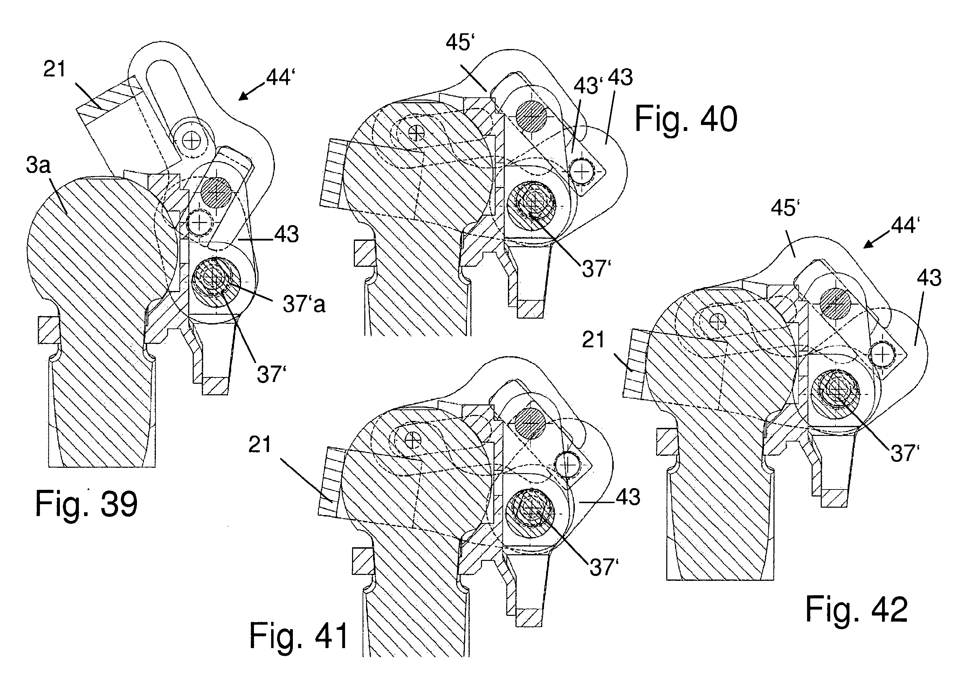

- Fig. 39: einen Schnitt durch den Kugeldurchmesser-Ausgleich in geöffneter Position,
- Fig. 40: einen Schnitt durch den Kugeldurchmesser-Ausgleich bei Beginn des Spannens (Durchmesser Kopf 49,5 mm),
- Fig. 41: einen Schnitt durch den Kugeldurchmesser-Ausgleich bei Beginn des Spannens (Durchmesser Kopf 50 mm),
- Fig. 42: einen Schnitt durch den Kupplungsbereich in gespannter Position,

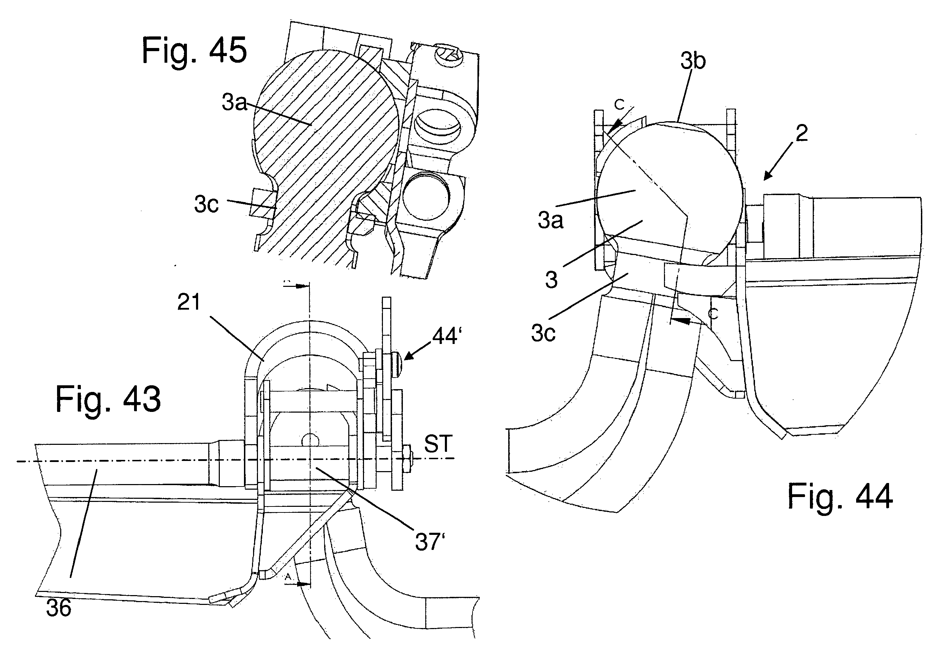

- Fig. 43: eine Seitenansicht des Kupplungsbereichs,
- Fig. 44: eine Detailansicht der Anhängerkupplung mit Kupplungsbereich, und
- Fig. 45: einen Schnitt entlang Linie C-C in Fig. 44.

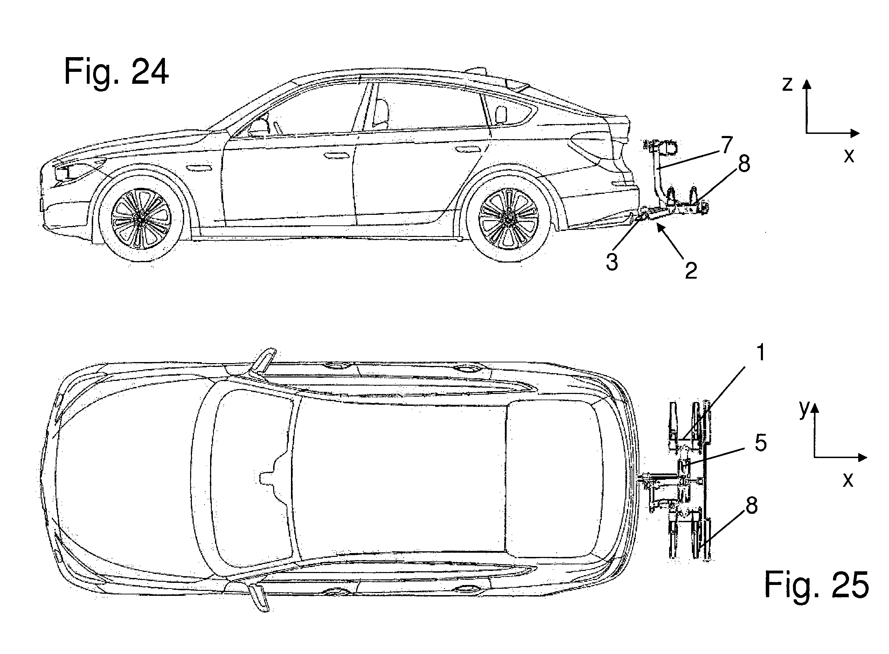

Bei der folgenden Beschreibung wird von einem als Heckträger an einer Anhängerkupplung angebrachten Lastenträger 1, wie in den Figuren 24 und 25 dargestellt, ausgegangen. Die Richtungsangaben beziehen sich auf die normale Fahrtrichtung des Fahrzeugs, wobei x die Richtung entgegen der Fahrtrichtung, y die Querrichtung und die vertikale Richtung mit z bezeichnet.

Ein zusammenklappbarer Lastenträger 1, der vorliegend dem Transport von zwei Fahrrädern oder zum Transport sonstiger Lasten, wie beispielsweise Skiern, Snowboards, einer Heckbox, dienen kann, ist mit Hilfe einer Kupplungsvorrichtung 2 an einer Anhängerkupplung 3 eines Kraftfahrzeugs anbringbar. Die Anhängerkupplung 3 weist hierbei einen im Wesentlichen kugelförmigen Kopf 3a mit einer ebenen Oberseite 3b und einen von unten in die Kugel eindringenden Hals 3c auf.

Der Lastenträger 1 hat einen zentralen Träger 4, welcher bei einem korrekt an einem Kraftfahrzeug als Heckträger angebrachten Lastenträger 1 in Fahrzeuglängsrichtung verlaufend ausgerichtet ist und im Querschnitt im Wesentlichen die Gestalt eines geschlossenen Hohlprofils aufweist. An einem Ende des zentralen Trägers 4 ist die Kupplungsvorrichtung 2 angeordnet, am anderen Ende des zentralen Trägers 4 ist der zusammenklappbar ausgebildete, den eigentlichen Ladebereich bildende Teil des Lastenträgers 1 vorgesehen. Hierfür sind zwei Trägerarme 5 mittels Konsolen 6 vorliegend exzentrisch bezüglich der Mittellängsachse des zentralen Trägers 4 verschwenkbar um Trägerarm-Schwenkachsen ST angebracht, wobei die Trägerarme 5 in ihrer zusammengeklappten Stellung im Wesentlichen parallel zueinander angeordnet sind und in ihrer aufgeklappten, einsatzbereiten Stellung im Wesentlichen miteinander fluchten. Ein etwa um 90° gebogen ausgebildeter Stützbügel 7 ist mit seinem horizontal verlaufenden Schenkel oberhalb des zentralen Trägers 4, zwischen den schwenkbar angebrachten Endbereichen der Trägerarme 5 angeordnet und erstreckt sich mit seinem vertikal verlaufenden Schenkel etwas beabstandet von der Kupplungsvorrichtung 2 nach oben.

Obwohl nicht näher beschrieben können bei einer alternativen Ausgestaltung die Konsolen samt Trägerarmen auch auf der Mittellängsachse des zentralen Trägers angeordnet sein.

Sollen mit dem aufgeklappten Lastenträger 1 beispielsweise zwei Fahrräder transportiert werden, so stehen dieselben parallel zueinander, in y-Richtung ausgerichtet, mit ihren Rädern auf entsprechend ausgebildeten Stellbereichen 8 an den Trägerarmen 5 und werden im oberen Bereich mittels nicht im Detail dargestellter Haltern, Schellen, Bügeln o.ä. mit dem Stützbügel 7 auf an sich bekannte Weise verbunden. Die Trägerarme 5 sind hierbei derart ausgebildet, dass sie um ihre Längsachse drehbar in der jeweiligen Konsole 6 angeordnet sind, so dass die hieran gabelförmig ausgebildeten Stellbereiche 8 für die zu befördernde Last im Nichtgebrauchsfall platzsparend ausgerichtet werden können. Bei Gebrauch sind die Trägerarme 5 jedoch formschlüssig mit dem Stützbügel 7 verbunden und in ihren Konsolen 6 gelagert. Alternativ können die Trägerarme auch starr in den Konsolen angeordnet sein oder ggf. auch einstückig hiermit ausgebildet sein. Aufgrund ihrer Funktion wird auf die Gesamtheit von Konsole 6 und Trägerarm 5 sowie den Stellbereich 8 auch als Hebel 10 eingegangen. Zum Betätigen kann ein entsprechender, nicht dargestellter Griffbereich an allen Bereichen ausgebildet oder steif hiermit verbunden sein.

Der vorliegend in Fahrtrichtung des Fahrzeugs rechts angeordnete Trägerarm 5 ist gleichzeitig Betätigungselement für die Kupplungsvorrichtung 2, während der zweite Trägerarm 5 vorliegend keine in Verbindung mit der Kupplungsvorrichtung 2 stehende Zusatzfunktion hat.

Im Folgenden werden der Aufbau und die Funktion der Kupplungsvorrichtung 2, welche dazu dient, den Lastenträger 1 mit der Anhängerkupplung 3 sicher zu verbinden, näher beschrieben.

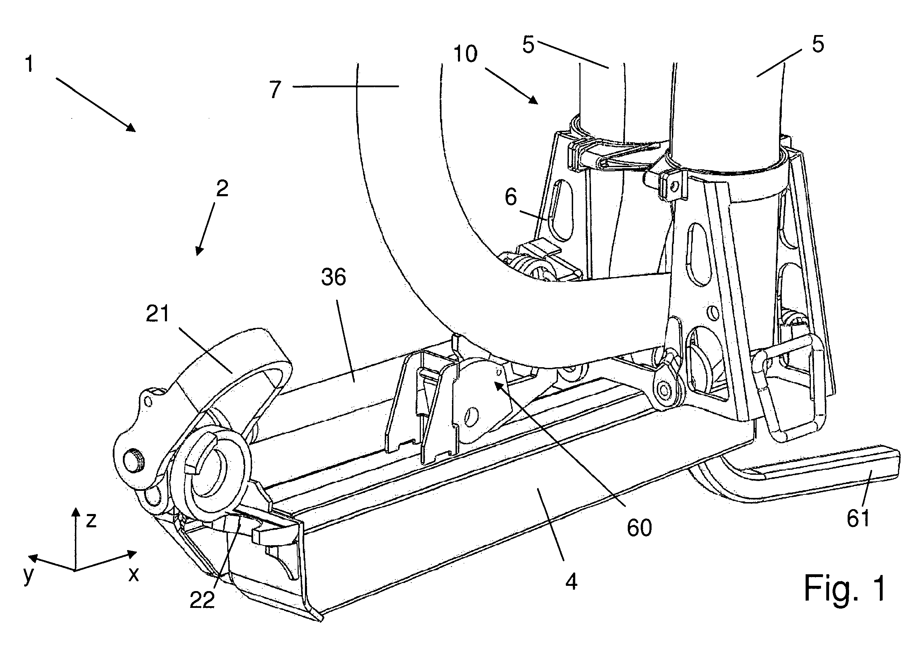

Der eigentliche Kupplungsbereich, also der Bereich, in welchem der Lastenträger 1 mit der Anhängerkupplung 3 verbunden ist, weist als wesentliche Teile eine stationär bezüglich des zentralen Trägers 4 ausgebildete Kalotte 20 und einen relativ hierzu beweglichen Spannbügel 21 auf. Für eine Stabilisierung der Position des Lastenträgers 1 vor dem Spannen ist zudem eine V- oder U-förmige Abstützung 22 im Halsbereich der Anhängerkupplung 3 vorgesehen, wie beispielsweise in Fig. 1 ersichtlich. Diese Abstützung 22 hat jedoch für das eigentliche Spannen der Kupplungsvorrichtung 2 keine Funktion. Eine derartige Stabilisierung ist vom Prinzip her beispielsweise aus der DE 195 40 041 A1 bekannt. Im Prinzip kann die Stabilisierung jedoch auch anders ausgebildet sein, solange sie nicht mit den Bewegungsabläufen beim Schließen des Spannbügels 21 und dem Spannen desselben nicht interferiert. Auf der Rückseite der Kalotte 20 ist ein spiegelbildlich zu einer Mittelebene ausgebildetes Gestell 23 mit mehreren Lagerstellen 23a, 23b zur trägerfesten Lagerung der Mechanik für die Kupplungsvorrichtung 2 ausgebildet, auf welche an späterer Stelle näher eingegangen wird.

Für ein definiertes Spannen und Sichern der Kupplungsvorrichtung 2 ist auf der kupplungsseitigen Außenseite der rechten Konsole 6 eine Rastvorrichtung 30 angeordnet, welche eine Klinke 31, die mit einem Zahnsegment 32 zusammenwirkt, eine Schenkelfeder 33 und eine Zugfeder 34 aufweist. Ferner ist Teil der Rastvorrichtung 30 eine Steuerplatte 35, welche fest mit dem zentralen Träger 4 verbunden ist.

Die Klinke 31 der Rastvorrichtung 30 ist verschwenkbar auf einem Bolzen 6a an der Außenseite der Konsole 6 innerhalb einer Abdeckung 6b angeordnet. Die Klinke 31 weist eine Bohrung, mit der sie auf dem Bolzen 6a verschwenkbar sitzt, und zwei sich nach außen erstreckende Enden auf, wobei an einem Ende vorliegend zwei Rastzähne 31 a und seitlich versetzt hierzu ein Nocken 31 b ausgebildet sind, und am anderen Ende eine Nase 31 c ausgebildet ist. Natürlich kann auch eine andere geeignete Anzahl von Rastzähnen vorgesehen sein. Die Schenkelfeder 33 ist auf dem Bolzen 6a sitzend benachbart der Klinke 31 positioniert, wobei sie mit einem Schenkel an einem Anschlag der Abdeckung 6b und mit dem anderen Schenkel an der Rückseite des Nockens 31 b anliegt und dadurch mit den Rastzähnen 31 a in Richtung des Zahnsegments 32 vorgespannt wird.

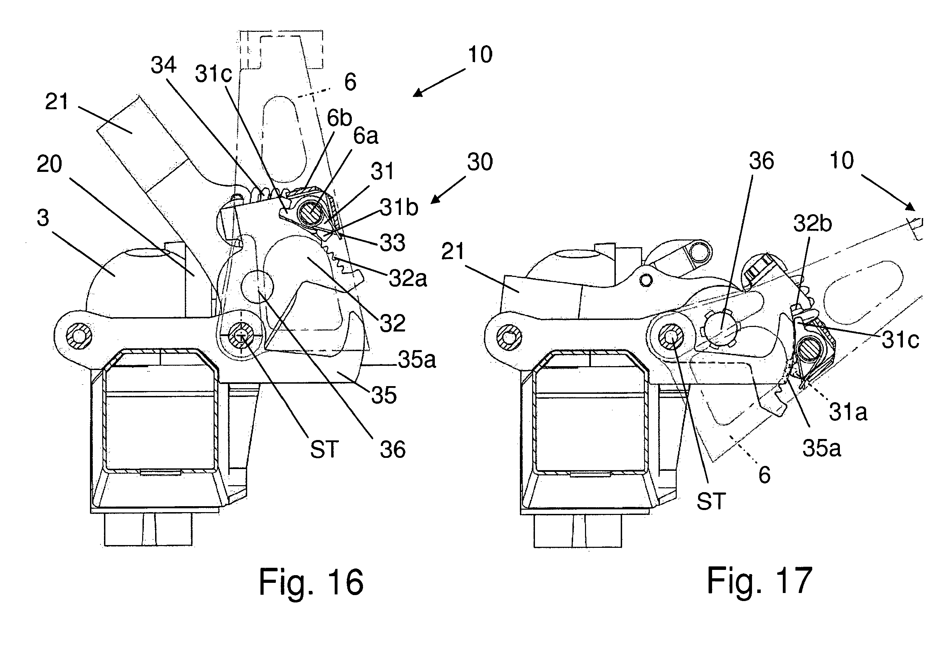

Das Zahnsegment 32 weist seinerseits einen Zahnbereich 32a und eine beabstandet vom Zahnbereich 32a ausgebildete, in Richtung Zahnbereich 32a ausgerichtete Nasenmitnahmeöffnung 32b auf, in welcher die Nase 31 c der Klinke 31 im geöffneten Zustand der Kupplungsvorrichtung 2 aufgenommen ist, wie in Fig. 16 dargestellt.

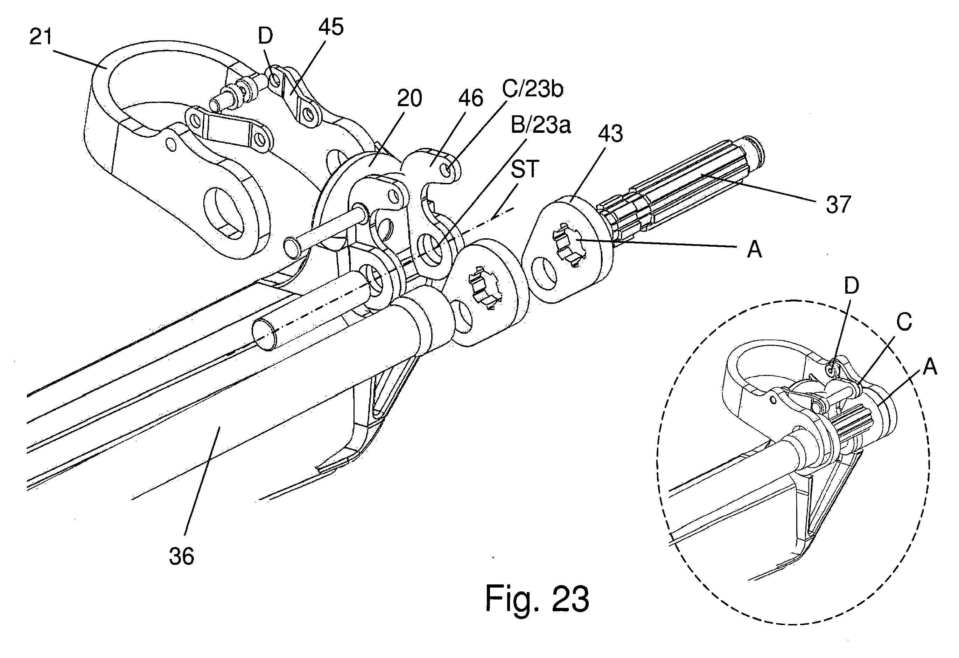

Die Konsole 6 mit dem Bolzen 6a, auf welchem die Klinke 31 sitzt, und das Zahnsegment 32 sind um besagte Träger-Schwenkachse ST verschwenkbar angeordnet. Das Zahnsegment 32 ist ferner mit einem Ende eines vorliegend versetzt zur Träger-Schwenkachse ST angeordneten Übertragungselements 36 formschlüssig verbunden, welches die Bewegung des Zahnsegments 32 (und damit im Wesentlichen auch die Bewegung der Konsole 6) an den am anderen Ende des Übertragungselements 36 angeordneten Kupplungsbereich überträgt. Das Übertragungselement 36 ist vorliegend mehrteilig in Gestalt eines Torsionselements mit einem rohrförmigen Torsionsbereich und einem hiermit drehsteif verbundenen profilierten Übertragungsbereich (Profilwelle 37) ausgebildet (vgl. Fig. 23).

Zur Betätigung des Spannbügels 21 sind auf der Profilwelle 37 des Übertragungselements 36 zwei parallel, durch zur Profilwelle 37 passende Gestaltung der Aufnahmeöffnung zueinander ausgerichtete Kurbellaschen 43 vorgesehen. Die Profilwelle 37 überträgt durch ihre profilierten Bereiche das Drehmoment des Übertragungselements 36 auf beide Kurbellaschen 43.

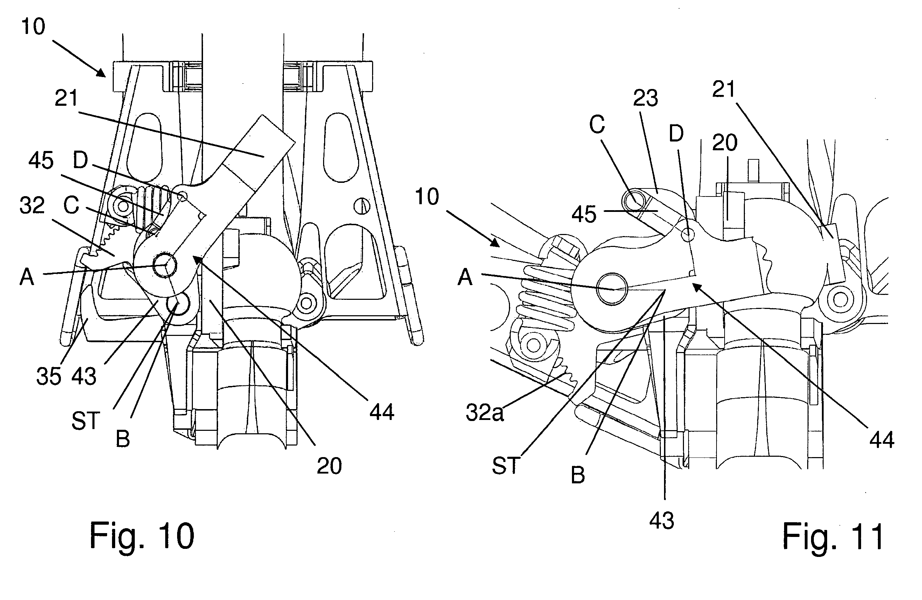

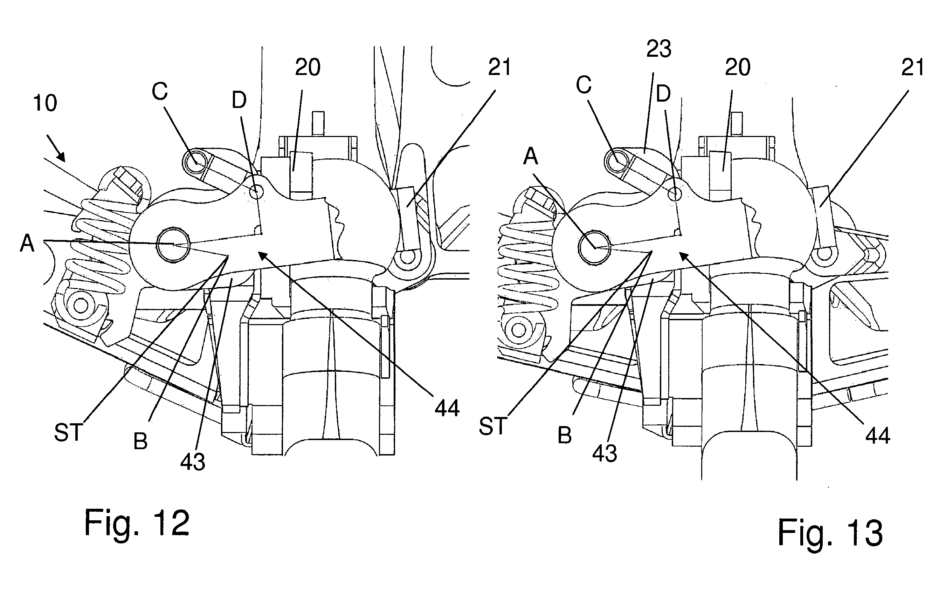

Die beiden Kurbellaschen 43 sind vorliegend Teil zweier spiegelbildlich ausgebildeter Viergelenke 44, welche in den Figuren 10 bis 13 mit einem Ausbruch am Spannbügel 21 zur Darstellung des Abstands des Kopfes 3a der Anhängerkupplung 3 dargestellt sind, und welche sicherstellen, dass der Spannbügel 21 beim Schwenken der Konsole 6 zuerst über den Kopf 3a der Anhängerkupplung 3 geschwenkt und bei einer Fortführung der Schwenkbewegung der Konsole 6 gespannt wird. Die beiden Viergelenke 44 sind über formschlüssige Querverbindungen (profilierter Bereich der Profilwelle 37) in ihren Bewegungen synchronisiert. Im Folgenden wird der Einfachheit halber nur auf das äußere, d.h. fahrzeugseitige Viergelenk 44 und dessen einzelne Bauteile näher eingegangen.

Wird nach dem Aufsetzen des Lastenträgers 1 auf die Anhängerkupplung 3 und dem Einnehmen einer stabilisierten Position die Konsole 6 durch ein vom Benutzer von Hand bewirktes Schwenken des Trägerarm 5 und Stellbereich 8 in einer Schwenkbewegung von der im Wesentlichen vertikalen Ausrichtung nach unten in eine in der Endstellung horizontale Ausrichtung bewegt, macht die Kurbellasche 43 des Viergelenks 44, verbunden über das Übertragungselement 36 mit Profilwelle 37, eine entsprechende Bewegung, wobei die Mittellängsachse des Übertragungselements 36 vorliegend einen Kreisbogen mit einem Radius von ca. 20 mm um die Trägerarm-Schwenkachse ST beschreibt. Im Folgenden wird auf den Gelenkpunkt, an welchem eine Zwangskopplung durch das Profil des Übertragungselements 36 mit der Kurbellasche 43 vorgesehen ist, als ersten Gelenkpunkt A Bezug genommen. Die Profilwelle 37 dient durch auf derselben ausgebildete zylindrische Bereiche als Achse im Gelenkpunkt A.

Auf den vom Gelenkpunkt A beabstandeten Gelenkpunkt der Kurbellasche 43 wird als zweiten Gelenkpunkt B Bezug genommen. Der zweite Gelenkpunk B wird durch die erste Lagerstelle 23a des Gestells 23 auf der Rückseite der Kalotte 20 gebildet. Die zweite Lagerstelle 23b des Gestells 23 am Ende eines gekrümmt ausgebildeten, sich weg von der Kalotte 20 erstreckenden Arms bildet den dritten Gelenkpunk C, in welchem eine kurze Schwinge 45 schwenkbar gelagert ist. Das freie Ende der Schwinge 45 ist mit einem am Spannbügel 21 ausgebildeten, vierten Gelenkpunk D beweglich gelagert. Der Spannbügel 21 sitzt seinerseits mit einer auf einer Seite leicht in Längsrichtung vergrößerten Öffnung auf der Profilwelle 37 des Übertragungselement 36, wobei in diesem Lagerbereich die Profilierung des profilierten Bereichs unterbrochen ist, in direkter Nachbarschaft der Kurbellasche 43, welche in einem profilierten Bereich angeordnet ist. Die vorliegend leicht langlochartige Öffnung auf der Trägerseite hat jedoch keinen Einfluss auf das Spannen des Spannbügels 21.

Durch die exzentrische Schwenkbewegung des Übertragungselements 36 und der hiermit verbundenen Kurbellasche 43, welche zumindest in einem ersten Schwenkbereich im Wesentlichen synchron mit der Schwenkbewegung der Konsole 6 verläuft, wird der erste Gelenkpunkt A, durch welchen die Längsachse des Übertragungselements 36 verläuft, aus einer Position von nahezu oberhalb der Trägerarm-Schwenkachse ST (siehe Fig. 10) in eine Position nahezu neben der Trägerarm-Schwenkachse ST bewegt (vgl. Fig. 11), so dass sich die Enden des auf dem Übertragungselement 36 angeordneten Spannbügels 21 von der Mitte des Kopfes 3a der Anhängerkupplung 3 wegbewegen, wobei sie sich leicht absenken. Aufgrund der Zwangskopplung über die kurze Schwinge 45 erfolgt gleichzeitig ein deutlich größeres Absenken des Bügelbereichs des Spannbügels 21, so dass der Bügelbereich in Anlage an den Kopf 3a gelangt, wie in Fig. 11 und 17 dargestellt, wobei Fig. 17 bereits den Beginn des Spannens zeigt. Dieser Schwenkbereich entspricht im Wesentlichen demjenigen, in dem das Zahnsegment 32 mitgenommen wird.

Ca. 30° (20° bei kleinstem Kugeldurchmesser des Kopfes 3a der Anhängerkupplung 3) vor Erreichen der Horizontalen durch den Hebel 10 legt sich der Spannbügel 21 an den Kopf 3a der Anhängerkupplung 3 an. Aufgrund der Anlage des Spannbügels 21 am Kopf 3a der Anhängerkupplung 3 wirkt vom das Viergelenk ABCD eine Gegenkraft über das Übertragungselement 36 auf das Zahnsegment 32, so dass zwar die Konsole 6 mit der hieran schwenkbar angebrachten Klinke 31 durch die Kraft des Bedieners weiter um die Trägerarm-Schwenkachse ST schwenkend nach unten bewegt wird, das Zahnsegment 32 samt dem hieran angebrachten Übertragungselement 36 aber ruht.

Durch das Weiterschwenken des Hebels 10 bewegt sich die konsolenfeste Klinke 31 mit ihrer Nase 31 c aus der Nasenmitnahmeöffnung 32b am Zahnsegment 32 heraus, wodurch sich die zwischen Konsole 6 und Zahnsegment 32 angeordnete Zugfeder 34 spannt. Durch die Freigabe der Nase 31 c der Klinke 31 nach Verlassen der Nasenmitnahmeöffnung 32b des Zahnsegments 32 wird die Klinke 31 nicht mehr in ihrer geöffneten Stellung gehalten, sondern die Federkraft der Schenkelfeder 33 bewirkt, dass sich die Sperrzähne 31 a der Klinke 31 in Richtung Zahnsegment 32 bewegen. In dem Bereich, in welchem die Steuerplatte 35 in Anlage an den Nocken 31 b der Klinke 31 ist, verhindert jedoch die Steuerplatte 35 mit ihrer Steuerbahn 35a ein Einfallen der Sperrzähne 31 a in den Zahnbereich 32a des Zahnsegments 32.

Verlässt beim Weiterschwenken der Konsole 6 der Nocken 31 b die Steuerbahn 35a der Steuerplatte 35, so entfällt die Gegenkraft auf die Klinke 31 und es können die Sperrzähne 31 a der Klinke 31 in den Zahnbereich 32a des Zahnsegments 32 einfallen, so dass wiederum eine formschlüssige Koppelung zwischen der Schwenkbewegung der Konsole 6 und der Bewegung des Übertragungselements 36 vorliegt. Die erneute Mitnahme des Zahnsegments 32 erfolgt über einen Winkelbereich von ca. 12° und endet mit der Einnahme der horizontalen Ausrichtung des Hebels 10, d.h. der Konsole 6 samt Trägerarm 5. In diesem Zustand wird das Übertragungselement 36 elastisch verformt, d.h. es stellt sich neben der Torsion auch ein Winkelversatz ein, welcher durch ein geeignetes Spiel ausgeglichen wird und keine Beeinträchtigung der Funktion darstellt.

Damit bildet die Steuerplatte 35 mit ihrer Steuerbahn 35a in Verbindung mit dem Nocken 31 b der Klinke 31 eine Ausgleichsanordnung, welche sicherstellt, dass bei laut Norm zulässigen Durchmesserabweichungen des Kopfes 3a der Anhängerkupplung 3 unabhängig von der Schwenkbewegung des vom Bediener betätigten Hebels 10 eine definierte Spannkraft vom Spannbügel 21 auf den Kopf 3a ausgeübt wird, so dass der Lastenträger 1 auch bei Durchmesserabweichungen des Kopfes 3a der Anhängerkupplung 3 immer etwa gleich fest auf der Anhängerkupplung 3 sitzt. Zudem wird der Bewegungsablauf des Hebels 10 bei der Übertragung auf die Kupplungsvorrichtung in einzelne Teilbereiche unterteilt, wobei in einem ersten Teilbereich der Schwenkbewegung das Zahnsegment 32 mit der Klinke 31 kraftschlüssig mitgenommen wird, wobei dieser Teilbereich im Wesentlichen dem Einschwenken dem Spannbügels 21 bis zum Inanlagegelangen an den Kopf 3a der Anhängerkupplung entspricht, und in einem zweiten Teilbereich der Schwenkbewegung des Hebels 10 ein formschlüssiger Eingriff der Sperrzähne 31 a in den Zahnbereich 32a des Zahnsegments 32 erfolgt, welcher das eigentliche Spannen des Spannbügels 21 bewirkt. Hierbei ist das Viergelenk derart ausgerichtet, dass Kurbellasche 43, Spannbügel 21 und die Kugel 3a der Anhängerkupplung 3 einen Kniehebel in fast gestreckter (oder gestreckter) Lage bilden, wodurch sich sehr große Klemmkräfte erzeugen lassen.

Zwischen den beiden Teilbereichen der Bewegung erfolgt eine Schwenkbewegung des Hebels 10 während der sich die Klinke 31 mit ihren Sperrzähnen 31a aufgrund der Wirkung der Steuerbahn 35a der Steuerplatte 35 am Zahnbereich 32a entlangbewegt, d.h. es ist ein dritter Teilbereich der Bewegung vorgesehen, in welchem zwar der Spannbügel 21 anliegt, aber zum Ausgleich von unterschiedlichen Kugeldurchmessern des Kopfes 3a noch kein Spannen erfolgt. Das eigentliche Spannen erfolgt somit stets in einem Bewegungsbereich, der durch die Endstellung des Hebels 10, d.h. der horizontalen Ausrichtung der Konsole 6, bestimmt ist.

Ein der Nasenmitnahmeöffnung 32b gegenüberliegender Anschlag 32c stellt vorliegend sicher, dass das Zahnsegment 32 bei dem Winkel der Konsole 6 von 12° zur Horizontalen immer einen gegenüber liegenden Sperrzahn 31 a findet und nicht außer Eingriff kommt, falls der Widerstand durch das Viergelenk stärker als die Zugfeder 34 ist. Erfolgt jedoch eine Zwangsmitnahme der Klinke 31 durch den Anschlag 32c, so ist nicht notwendigerweise eine im Sollbereich liegende Spannkraft des Spannbügels 21 sichergestellt.

Nach Erreichen der horizontalen Ausrichtung des Hebels 10 wird vorliegend die Konsole 6 im horizontal ausgerichteten Zustand verriegelt, so dass die Spannkraft aufrechterhalten wird. Die Verriegelung kann jedoch auch an einer anderen Stelle des Hebels 10 erfolgen, also beispielsweise weiter von der Schwenkachse entfernt am Trägerarm 5 oder gegebenenfalls auch am Stellbereich 8.

In diesem einseitig aufgeklappten Zustand des Lastenträgers 1 ist, allein durch die eine Schwenkbewegung der Konsole 6 samt Trägerarm 5 die Kupplungsvorrichtung 2 somit vollständig gespannt und an der Anhängerkupplung 3 gesichert. Durch die vorstehend beschriebene Mechanik wird unabhängig von der Stellung der Klemmung bei Anlage des Spannbügels 21 immer der gleiche Spannweg erreicht, wobei eine gewisse Toleranz durch die Zahnteilung vorgesehen ist.

Das nachfolgende Herabschwenken der zweiten Konsole 6 samt zweitem Trägerarm 5 und dessen entsprechendes Verriegeln in der horizontalen Stellung, um den Lastenträger 1 einsatzbereit zu machen, hat keinen Einfluss mehr auf das Spannen der Kupplungsvorrichtung 2.

Im Prinzip kann auch die zweite Konsole 6 samt zweitem Trägerarm 5 zuerst herabgeschwenkt und verriegelt werden, wodurch sich der Lastenträger 1 einfacher an der Anhängerkupplung 3 ausrichten lässt.

Das Abbauen des Lastenträgers 1 von der Anhängerkupplung 3 erfolgt durch Entriegeln und Hochklappen der (spannfunktionslosen) Konsole 6 samt Trägerarm 5. Anschließend wird die zweite Konsole 6 entriegelt, das durch Niederdrücken des Hebels 10 etwas erleichtert werden kann. Durch das Entriegeln entspannt sich das elastisch leicht verformte Übertragungselement 36, wodurch sich ein automatisches Rückschwenken der Konsole 6 um ca. 10° ergibt. Der Benutzer kann nun die Konsole 6 samt Trägerarm 5 in die vertikale Stellung hochschwenken und in derselben sichern. Beim Anheben der Konsole 6 wird die Klinke 31 dann bei ca. 12° durch die Steuerplatte 35 über den Nocken 31 b aus dem Zahnbereich 32a des Zahnsegments 32 gehoben. In diesem Zustand ist der Zahneingriff bereits kraftfrei. Zugfeder 34 und Reibung bewirken, dass das Zahnsegment 32 in seiner Position verbleibt und erst bei Eingriff der Nase 31 c in die Nasenmitnahmeöffnung 32b weiterbewegt und die Mechanik vollständig geöffnet wird.

Der Lastenträger 1 ist ferner um eine in y-Richtung verlaufende Achse vom Fahrzeug weg abklappbar, um das Be- und Entladen zu erleichtern oder den Kofferraum des Fahrzeugs zugänglich zu machen. Hierfür sind eine Kippvorrichtung 60 mit einem Pedal 61 vorgesehen.

Vorstehend dient der rechte Trägerarm 5, der mit der Konsole 6 verbunden ist, als eigentlicher Hebel 10 zum Betätigen der Kupplungsvorrichtung 2, wobei eine Betätigung desselben natürlich auch durch ein Angreifen am hiermit biegesteif verbundenen Stellbereich oder der Konsole für die zu befördernde Last erfolgen kann. Natürlich kann bei entsprechend gespiegeltem Aufbau der linke Trägerarm in Verbindung mit der linken Konsole die Hebelfunktion übernehmen.

Obwohl vorstehend die Umsetzung der (reinen) Schwenkbewegung der Konsole 6 in einen komplexeren Bewegungsablauf durch ein Viergelenk beschrieben ist, kann diese Bewegungsumwandlung in die komplexe Schwenk-Spannbewegung des Spannbügels (und natürlich auch die entsprechende Umkehrung zum Öffnen) auch mittels eines anderen geeigneten Getriebes, insbesondere eines Hebelgetriebes oder auch eines Kurvengetriebes oder einer geeigneten Kombination hiervon, realisiert werden.

Im Folgenden wird unter Bezugnahme auf die weiteren Figuren der Zeichnung eine Variante in Bezug auf das Hebelgetriebe näher beschrieben. Hierbei sind gleiche oder gleichwirkende Elemente mit den gleichen Bezugszeichen wie beim Ausführungsbeispiel bezeichnet. Sofern nachfolgend nicht ausdrücklich als anders beschrieben, wird auf die Beschreibung des Ausführungsbeispiels verwiesen.

Ein wesentlicher Unterschied zum vorstehend beschriebenen Ausführungsbeispiel ist, dass das im hebelseitigen Bereich durch ein Torsionsrohr gebildete Übertragungselement 36 gemäß der Variante koaxial und nicht versetzt zur Trägerarm-Schwenkachse ST angeordnet ist. Der Spannbügel 21 ist auf exzentrisch zur Trägerarm-Schwenkachse ST (und Drehachse des Übertragungselements 36) angeordneten Lagerbereichen gelagert. Auch in diesem Fall ist das Übertragungselement 36 vorliegend mehrteilig ausgebildet, wobei es wiederum besagten Torsionsbereich, gebildet durch ein Torsionsrohr, auf der Trägerseite und einen hiermit drehsteif verbundenen Übertragungsbereich mit exzentrisch angeordneten Lagerstellen 37'a für den Spannbügel 21 aufweist, auf welchen im Folgenden als Exzenterwelle 37' eingegangen wird, obwohl nur Teilbereiche exzentrisch zu der zur Trägerarm-Schwenkachse ST koaxialen Mittellängsachse dieses Übertragungsbereichs angeordnet sind. Ferner ist anstelle eines Viergelenks 44 zur Umsetzung der Bewegung des Hebels 10 ein anderes Mehrgelenk 44' vorgesehen, welches aber im Prinzip zu einem entsprechenden Bewegungsablauf des Spannbügels 21 führt.

Der prinzipielle Aufbau von Kalotte 20 mit einem spiegelbildlich ausgebildeten Gestell 23, welches auf jeder Seite zwei Lagerstellen 23a, 23b, allerdings leicht verändert angeordnet, aufweist, entspricht dem des Ausführungsbeispiel. Die grundlegende Funktion des einen, um eine Schwenkachse ST verschwenkbaren Hebels 10 (gebildet durch die in Fahrtrichtung gesehen rechte Konsole 6, den hiermit verbundenen rechten Trägerarm 5 und dem hieran ausgebildeten Stellbereich 8) als einzigem Bedienelement zum Einschwenken des Spannbügels 21 über den Kopf 3a der Anhängerkupplung 3 sowie zum Spannen desselben entspricht ebenfalls derjenigen des zuvor beschriebenen Ausführungsbeispiels.

Im Folgenden werden der Aufbau und die Funktion der Kupplungsvorrichtung 2 gemäß der Variante näher beschrieben.

Auch im Falle der Variante ist vor dem Spannen und Sichern eine Stabilisierung des Lastenträgers 1 auf der Anhängerkupplung 3 entsprechend dem Ausführungsbeispiel vorgesehen.

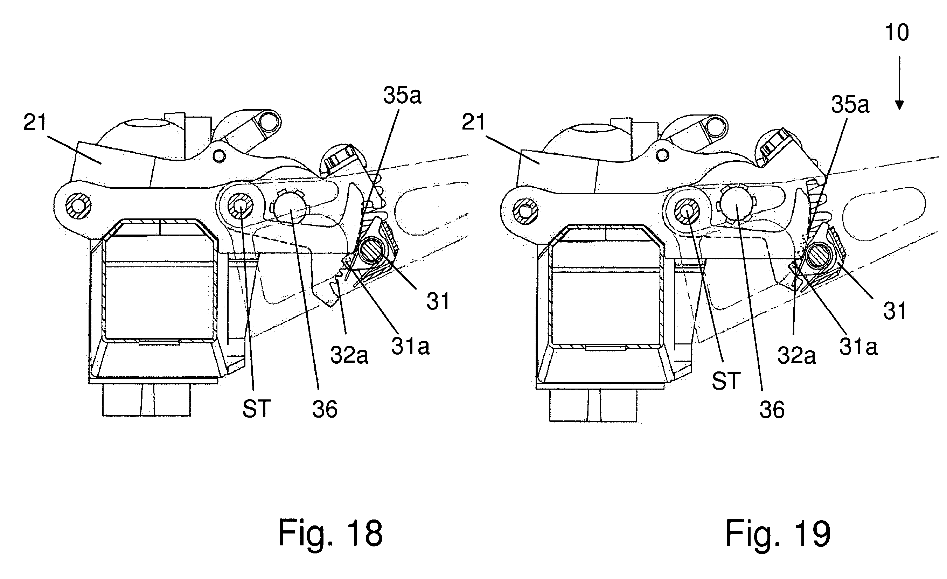

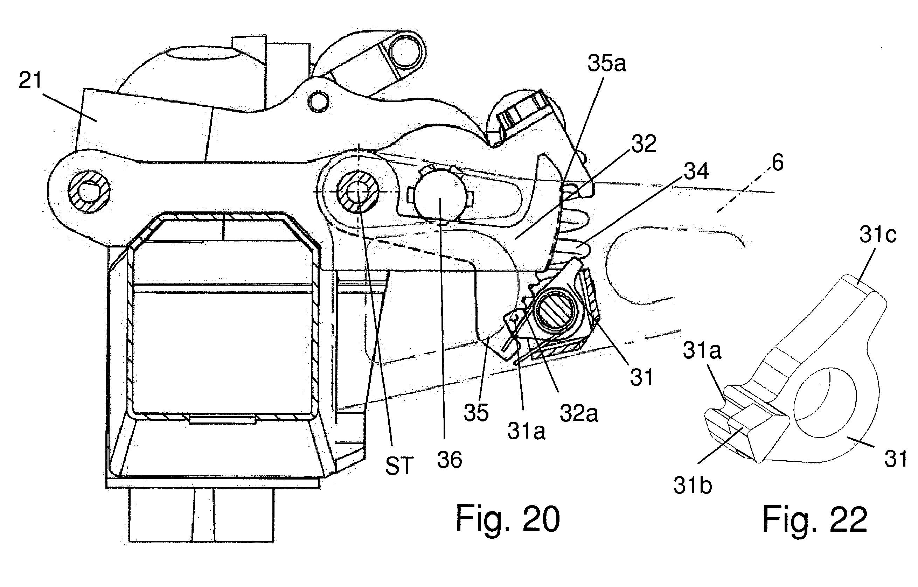

Für ein definiertes Spannen und Sichern der Kupplungsvorrichtung 2 ist - entsprechend dem Ausführungsbeispiel - auf der kupplungsseitigen Außenseite der rechten, um die Schwenkachse ST verschwenkbaren Konsole 6 eine Rastvorrichtung 30 angeordnet, welche eine Klinke 31, die mit einem Zahnsegment 32 zusammenwirkt, eine Schenkelfeder 33 und eine Zugfeder 34 aufweist. Ferner ist Teil der Rastvorrichtung 30 eine Steuerplatte 35, welche fest mit dem zentralen Träger 4 verbunden ist. Hierbei wird zum besseren Verständnis auf die Figuren 18 bis 20 verwiesen, wobei das Übertragungselement 36 im Unterschied zur Darstelllung konzentrisch zur Trägerarm-Schwenkachse ST angeordnet ist, und der Kupplungsbereich leicht verändert ausgebildet ist.

Die Klinke 31 der Rastvorrichtung 30 ist verschwenkbar auf einem Bolzen 6a an der Außenseite der Konsole 6 innerhalb einer Abdeckung 6b angeordnet. Die Klinke 31 weist eine Bohrung, mit der sie auf dem Bolzen 6a verschwenkbar sitzt, und zwei sich nach außen erstreckende Enden auf, wobei an einem Ende vorliegend zwei Rastzähne 31 a und seitlich versetzt hierzu ein Nocken 31 b ausgebildet sind, und am anderen Ende eine Nase 31 c ausgebildet ist. Natürlich kann auch eine andere geeignete Anzahl von Rastzähnen vorgesehen sein. Die Schenkelfeder 33 ist auf dem Bolzen 6a sitzend benachbart der Klinke 31 positioniert, wobei sie mit einem Schenkel an einem Anschlag der Abdeckung 6b und mit dem anderen Schenkel an der Rückseite des Nockens 31 b anliegt und dadurch mit den Rastzähnen 31 a in Richtung des Zahnsegments 32 vorgespannt wird.

Das Zahnsegment 32 weist seinerseits einen Zahnbereich 32a und eine beabstandet vom Zahnbereich 32a ausgebildete, in Richtung Zahnbereich 32a ausgerichtete Nasenmitnahmeöffnung 32b auf, in welcher die Nase 31 c der Klinke 31 im geöffneten Zustand der Kupplungsvorrichtung 2 aufgenommen ist.

Die Konsole 6 mit dem Bolzen 6a, auf welchem die Klinke 31 sitzt, und das Zahnsegment 32 sind um besagte Träger-Schwenkachse ST verschwenkbar angeordnet. Das Zahnsegment 32 ist ferner mit einem Ende eines vorliegend konzentrisch zur Träger-Schwenkachse ST angeordneten Übertragungselements 36 formschlüssig verbunden, welches die Bewegung des Zahnsegments 32 (und damit im Wesentlichen auch die Bewegung der Konsole 6) an den am anderen Ende des Übertragungselements 36 angeordneten Kupplungsbereich überträgt. Das Übertragungselement 36 ist vorliegend mehrteilig in Gestalt eines Torsionselements mit einem rohrförmigen Torsionsbereich und einem hiermit drehsteif verbundenen exzentrischen Übertragungsbereich (Exzenterwelle 37') ausgebildet.

Zur Betätigung des Spannbügels 21 ist auf der Exzenterwelle 37' des Übertragungselements 36 eine durch zu in diesem Bereich der Profilwelle 37 passende Gestaltung der Aufnahmeöffnung ausgerichtete Kurbellaschen 43 vorgesehen. Die Exzenterwelle 37' ist in entsprechenden, zylinderförmigen Lagerbereichen im Gestell 23 auf der Rückseite der Kalotte 20 konzentrisch zur Trägerarm-Schwenkachse ST in ersten Lagerstellen 23a gelagert.

Die Exzenterwelle 37' überträgt durch ihren entsprechend profilierten Bereich formschlüssig das Drehmoment des Übertragungselements 36 auf Kurbellasche 43, wobei die Kurbellasche 43 aufgrund einer leicht exzentrischen Anordnung um einen Punkt außerhalb der Mitte des Verbindungsbereichs schwenkt.

Die Kurbellasche 43 weist einen beabstandet von der Exzenterwelle 37' einen vorstehenden Stift auf, auf welchem drehbar ein Schieber 43' gelagert ist, welcher verschiebbar in einer Nut einer Schwinge 45' angeordnet ist. Im anderen Bereich der Schwinge 45' ist ein Langloch ausgebildet, in welchem ein Bolzen gelagert ist, welcher mit dem Bügelbereich des Spannbügels 21 schwenkbar verbunden ist. Diese Ausgestaltung ergibt ein Mehrgelenk, welches - gesteuert durch das Schwenken des Übertragungselements 36 (und damit des Hebels 10) zu einem Bewegungsablauf des Spannbügels 21 führt, bei welchem der Spannbügel 21 zuerst über den Kopf 3a der Anhängerkupplung 3 einschwenkt und anschließend gespannt wird. Durch die Rastvorrichtung 20 mit ihrer Klinke 31 ein Ausgleich in Bezug auf den Kugeldurchmesser des Kopfes 3a vorgesehen, d.h. es wird unabhängig von der Stellung der Klemmung bei Anlage des Spannbügels 21 immer der gleiche Spannweg erreicht, wobei eine gewisse Toleranz durch die Zahnteilung vorgesehen ist.

Sowohl im Falle des Ausführungsbeispiels als auch im Falle der Variante liegt die Schwenkachse des Hebels (Trägerarm-Schwenkachse ST) im Wesentlichen parallel zur x-Richtung als auch die im Raum bewegliche Achse, um welche der Spannbügel 21 schwenkt. Im Prinzip ist jedoch auch eine Veränderung der Bewegungsrichtung möglich, beispielsweise mittels eines weiteren Getriebes, so dass beispielsweise der Spannbügel um eine Achse parallel zur y-Richtung schwenkt.

Beim vorstehend beschriebenen Ausführungsbeispiel und seiner Variante wird der Lastenträger 1 in beiden Fällen in der Regel im vollständig aufgeklappten Zustand benutzt. Im Prinzip kann aber, dadurch, dass der zweite Hebel (Konsole, Trägerarm, Stellbereich) keine Spannfunktion haben, derselbe auch im hochgeklappten Zustand benutzt werden. Ferner kann, gemäß einer weiteren, nicht in der Zeichnung dargestellten Variante der zweite Hebel auch vollständig entfallen.

## Patentansprüche

1. Zusammenklappbarer Lastenträger (1) mit mindestens einem Stellbereich (8), auf welchen zu transportierende Last, insbesondere mindestens ein Fahrrad, stellbar ist, und einer Kupplungsvorrichtung (2), welcher an einer Anhängerkupplung (3) mit einem im Wesentlichen kugelförmigen Kopf (3a) lösbar anbringbar ist, wobei der Lastenträger (1) stabilisiert auf die Anhängerkupplung (3) aufsetzbar ist, anschließend ein Spannbügel (21) über den Kopf (3a) der Anhängerkupplung (3) schwenkbar und mittels Spannens des Spannbügels (21) fixierbar ist, wobei das Einschwenken und Spannen des Spannbügels (21) durch eine Schwenkbewegung eines einzigen als Bedienelement dienenden Hebels (10) um eine Schwenkachse (ST) erfolgt, **dadurch gekennzeichnet, dass** der als Bedienelement dienende Hebel (10) gleichzeitig auch den Stellbereich (8) bildet.

2. Lastenträger nach Anspruch 1, **dadurch gekennzeichnet, dass** die Schwenkbewegung des Hebels (10) mittels eines einzigen Übertragungselements (36) an die Kupplungsvorrichtung (2) übertragbar ist, und die Kupplungsvorrichtung (2) eine Getriebeanordnung aufweist, welche die Schwenkbewegung des Hebels (10) in einem ersten Teilbereich in eine Einschwenkbewegung des Spannbügels (21) und in einem zweiten Teilbereich in eine Spannbewegung des Spannbügels (21) umsetzt.

3. Lastenträger nach Anspruch 2, **dadurch gekennzeichnet, dass** eine Ausgleichsanordnung vorgesehen ist, welche in einem dritten Teilbereich der Schwenkbewegung des Hebels (10) einen Ausgleich für unterschiedliche Kugeldurchmesser des Kopfes (3a) der Anhängerzkupplung (3) vorsieht, wobei der dritte Teilbereich der Schwenkbewegung zwischen dem ersten Teilbereich, in welchem die Einschwenkbewegung erfolgt, und dem zweiten Teilbereich, in welchem die Spannbewegung des Spannbügels (21) erfolgt, vorgesehen ist.

4. Lastenträger nach einem der Ansprüche 2 bis 3, **dadurch gekennzeichnet, dass** das Übertragungselement (36) mit einem Zahnsegment (32) formschlüssig verbunden ist, der Hebel (10) mit einer Klinke (31) verbunden ist, welche in Eingriff mit einem Zahnbereich (32a) des Zahnsegments (32) gelangen kann, wobei ein Federelement (34) zwischen Klinke (31) und Zahnsegment (32) angeordnet ist, welche im ersten Teilbereich der Schwenkbewegung das Zahnsegment (32) mit der Klinke (31) kraftschlüssig mitnimmt und im zweiten Teilbereich der Schwenkbewegung einen Eingriff der Sperrzähne (31 a) in den Zahnbereich (32a) des Zahnsegments (32) ermöglicht.

5. Lastenträger nach Anspruch 4, **dadurch gekennzeichnet, dass** der Eingriff der Sperrzähne (31 a) durch eine Steuerplatte (35) im dritten Teilbereich der Schwenkbewegung des Hebels (10) verhindert wird.

6. Lastenträger nach einem der Ansprüche 2 bis 5, **dadurch gekennzeichnet, dass** die Getriebeanordnung durch ein Hebelgetriebe und/oder Kurvengetriebe gebildet ist.

7. Lastenträger nach Anspruch 6, **dadurch gekennzeichnet, dass** die Getriebeanordnung, welche ausgehend von einer reinen Schwenkbewegung das Einschwenken des Spannbügels (21) und das Spannen des Spannbügels (21) bewirkt, durch ein Viergelenk gebildet ist.

8. Lastenträger nach Anspruch 6 oder 7, **dadurch gekennzeichnet, dass** das Übertragungselement (36) exzentrisch bezüglich der Schwenkachse (ST) des Hebels (10) angeordnet ist.

9. Lastenträger nach einem der Ansprüche 2 bis 6, **dadurch gekennzeichnet, dass** das Übertragungselement (36) konzentrisch bezüglich der Schwenkachse (ST) des Hebels (10) angeordnet ist, und mindestens eine exzentrische Lagerstelle (37'a) aufweist.

10. Lastenträger nach einem der vorhergehenden Ansprüche, **dadurch gekennzeichnet, dass** die Schwenkachse (ST) des Hebels (10) parallel zu einem zentralen Träger (4) verläuft.

## Claims

1. Collapsible load carrier (1) with at least one adjusting range (8), on which the load to be transported, particularly at least one bicycle, can be placed, and a coupling mechanism (2) which can be detachably attached to a trailer coupling (3) with a substantially spherical head (3a), the load carrier (1) being able to be placed on the trailer coupling (3) in a stabilized way, afterwards a tensioning clamp (21) can be pivoted over the head (3a) of the trailer coupling (3) and fixed by tensioning the clamp (21), the swivelling in and tensioning of the clamp (21) taking place by a swinging movement of a single lever (10) serving as control element around a pivot axis (ST), **characterised in that** the lever (10s) serving as control element at the same time also forms the adjusting range (8).

2. Load carrier according to claim 1, **characterised in that** the swinging movement of the lever (10) can be transmitted to the coupling mechanism (2) by means of a single transmission element (36), and the coupling mechanism (2) presents a gearing, which transforms the swinging movement of the lever (10) in a first portion into a swivelling-in movement of the clamp (21) and in a second portion into a tensioning movement of the clamp (21).

3. Load carrier according to claim 2, **characterised in that** a compensation arrangement is provided, which in a third portion of the swinging movement of the lever (10) provides a compensation for different ball diameters of the head (3a) of the trailer coupling (3), the third portion of the swinging movement being provided between the first portion, in which the swivelling-in movement takes place, and the second portion, in which the tensioning movement of the clamp (21) takes place.

4. Load carrier according to one of claims 2 to 3, **characterised in that** the transmission element (36) is positively connected with a tooth segment (32), the lever (10) is connected with a latch (31), which can engage with a tooth area (32a) of the tooth segment (32), a spring element (34) being arranged between latch (31) and tooth segment (32), which in the first portion of the swinging movement entrains the tooth segment (32) with the latch (31) in a non-positive connection and in the second portion of the swinging movement makes possible an engagement of the ratchet teeth (31 a) in the tooth area (32a) of the tooth segment (32).

5. Load carrier according to claim 4, **characterised in that** the engagement of the ratchet teeth (31 a) is prevented by a control plate (35) in the third portion of the swinging movement of the lever (10).

6. Load carrier according to one of claims 2 to 5, **characterised in that** the gearing is formed by a link and/or cam mechanism.

7. Load carrier according to claim 6, **characterised in, that** the gearing, which based on a clean swinging movement entails the swivelling-in of the clamp (21) and the tensioning of the clamp (21), is formed by a four-joint.

8. Load carrier according to claim 6 or 7, **characterised in that** the transmission element (36) is eccentric to the pivot axis (ST) of the lever (10).

9. Load carrier according to one of the claims 2 to 6, **characterised in that** the transmission element (36) is concentric to the pivot axis (ST) of the lever (10) and presents at least one eccentric bearing (37'a).

10. Load carrier according to any of the preceding claims, **characterised in that** the pivot axis (ST) of the lever (10) runs in parallel with a central carrier (4).

## Revendications

1. Porte-charge repliable (1) avec au moins une zone de réglage (8) sur laquelle la charge à transporter, en particulier au moins une bicyclette, peut être placée, et un dispositif de couplage (2), lequel peut être attaché de manière amovible à un attelage de remorque (3) avec une tête essentiellement sphérique (3a), où le porte-charge (1) est appuyable sur l'attelage de remorque (3) de manière stabilisée, ensuite un étrier de tension (21) est pivotable au-dessus de la tête (3a) de l'attelage de remorque (3) et est fixable en serrant l'étrier de tension (21), le pivotement et le serrage de l'étrier de tension (21) ayant lieu par un mouvement de rotation d'un seul levier qui sert d'élément de commande (10) autour d'un axe pivotant, **caractérisé en ce que** le levier qui sert d'élément de commande (10) forme en même temps la zone de réglage (8).

2. Porte-charge selon la revendication 1, **caractérisé en ce que** le mouvement de rotation du levier (10) peut être transféré au dispositif de couplage (2) au moyen d'un seul élément de transfert (36), et que le dispositif de couplage (2) présente un système de transmission qui transforme le mouvement de rotation du levier (10) dans une première section en un mouvement de rotation de l'étrier de tension (21) et dans une seconde section en un mouvement de serrage de l'étrier de tension (21).

3. Porte-charge selon la revendication 2, **caractérisé en ce qu'**un système de compensation est prévu, lequel prévoit dans une troisième section du mouvement de rotation du levier (10) une compensation pour diamètres différents de la sphère de la tête (3a) de l'attelage de remorque (3), la troisième section du mouvement de rotation étant prévue entre la première section, dans laquelle a lieu le mouvement de rotation, et la seconde section, dans laquelle a lieu le mouvement de serrage de l'étrier de tension (21).

4. Porte-charge selon l'une des revendications 2 à 3, **caractérisé en ce que** l'élément de transfert (36) est lié à engagement positif avec un segment denté (32), le levier (10) est lié à un loquet (31), lequel peut parvenir en engrènement avec une zone dentée (32a) du segment denté (32), un élément à ressort (34) étant disposé entre le loquet (31) et le segment denté (32), lequel dans la première section du mouvement de rotation entraîne par adhérence le segment denté (32) avec le loquet (31) et dans la seconde section du mouvement de rotation permet un engrènement des dents de blocage (31 a) dans la zone dentée (32a) du segment denté (32).

5. Porte-charge selon la revendication 4, **caractérisé en ce que** l'engrènement des dents de blocage (31 a) est empêché par une plaque de commande (35) dans la troisième section du mouvement de rotation du levier (10).

6. Porte-charge selon l'une des revendications 2 à 5, **caractérisé en ce que** le système de transmission est formé par un mécanisme à levier et/ou à came.

7. Porte-charge selon la revendication 6, **caractérisé en ce que** le système de transmission qui, en partant d'un mouvement de rotation pur, provoque le pivotement de l'étrier de tension (21) et le serrage de l'étrier de tension (21, est formé par un quadrilatère articulé.

8. Porte-charge selon la revendication 6 ou 7, **caractérisé en ce que** l'élément de transfert (36) est disposé de façon excentrique par rapport à l'axe pivotant (ST) du levier (10).

9. Porte-charge selon l'une des revendications 2 à 6, **caractérisé en ce que** l'élément de transfert (36) est disposé de façon concentrique par rapport à l'axe pivotant (ST) du levier (10), et qu'il présente au moins un point d'appui excentrique (37'a).

10. Porte-charge selon l'une des revendications précédentes, **caractérisé en ce que** l'axe pivotant (ST) du levier (10) s'étend parallèlement à un support central (4).
